# EUROPEAN PATENT SPECIFICATION

(11) **EP 3 111 439 B1**
(45) Date of publication and mention of the grant of the patent: **26.02.2020**
(21) Application number: 15715397.4
(22) Date of filing: 02.03.2015
(51) Int. Cl.: G09B 19/24

(54) **PORTABLE VIRTUAL WELDING SYSTEM**
TRAGBARES VIRTUELLES SCHWEISSSYSTEM
SYSTÈME DE SOUDAGE VIRTUEL

(30) Priority: 28.02.2014 US 201461946185 P; 25.11.2014 US 201414552739
(43) Date of publication of application: 04.01.2017
(73) Proprietor: Lincoln Global, Inc., Santa Fe Springs, CA 90670 (US)
(72) Inventor: POSTLETHWAITE, Deanna, Sparks, NV 89436 (US); WALLACE, Matthew Wayne, South Windsor, CT 06074 (US); LEACH, Jason, Cleveland Heights, OH 44118 (US); ADITJANDRA, Antonius, Chardon, OH 44024 (US)
(74) Representative: Grosse Schumacher Knauer von Hirschhausen
(86) International application number: PCT/IB2015/000257
(87) International publication number: WO 2015/128729

(56) References cited:
- US-A1- 2011 091 846
- US-A1- 2012 189 993

## Description

### RELATED APPLICATIONS

The present application is being filed as a non-provisional patent application claiming priority/benefit under 35 U.S.C. § 119(e) from U.S. Provisional Patent Application No. 61/946,185 filed on February 28, 2014, and from US Patent Application No. 14/552,739 filed November 25, 2014.
(1) U.S. patent application serial no. 12/501,257, filed on July 10, 2009 and entitled System And Method Providing Arc Welding Training In A Real-Time Simulated Virtual Reality Environment Using Real-Time Weld Puddle Feedback, now U.S. patent no. 8,747,116;
(2) U.S. patent application serial no. 12/501,263, filed on July 10, 2009 and entitled Virtual Reality Pipe Welding Simulator;
(3) U.S. patent application serial no. 12/504,870, filed on July 17, 2009 and entitled Welding Simulator;
(4) U.S. patent application serial no. 13/081,725, filed on April 7, 2011 and entitled Virtual Testing And Inspection Of A Virtual Weldment, now U.S. patent no. 8,657,605;
(5) U.S. patent application serial no. 13/364,489, filed on February 2, 2012 and entitled Virtual Welding System; and
(6) U.S. patent application serial no. 13/545,058, filed on July 10, 2012 and entitled Virtual Reality Pipe Welding Simulator And Setup.

### FIELD

The present invention pertains to systems for emulating a virtual welding environment, and more particularly to a portable virtual welding system and a container for storing and transporting various components of the portable virtual welding system. More particularly, the innovation provides a portable virtual welding system according to preamble of claim 1.

### BACKGROUND

For decades companies have been teaching welding skills. Traditionally, welding has been taught in a real world setting, that is to say that welding has been taught by actually striking an arc with an electrode on a piece of metal. Instructors, skilled in the art, oversee the training process, making corrections in some cases, as the trainee performs a weld. By instruction and repetition, a new trainee learns how to weld using one or more processes. However, costs are incurred with every weld performed, which varies depending on the welding process being taught.

In more recent times, cost saving systems for training welders have been employed. Some systems incorporate a motion analyzer. The analyzer includes a physical model of a weldment, a mock electrode, and sensing means that track movement of the mock electrode. A report is generated that indicates to what extent the electrode tip traveled outside an acceptable range of motion. More advanced systems incorporate the use of virtual reality, which simulates manipulation of a mock electrode in a virtual setting. Similarly, these systems track position and orientation. Such systems teach only muscle memory, but cannot teach the more advanced welding skills required of a skilled welder. US 2011/091846 A1, against which claim 1 is delimited, discloses a portable virtual welding system for facilitating a virtual welding activity with a case for transport and protection of components, with the components non-integrated with the case.

### SUMMARY

The invention provides a portable virtual welding system for facilitating a virtual welding activity according to claim 1. Embodiments of the present invention thus pertain to a simulator for facilitating virtual welding activity, including but not limited to the following elements: a logic processor-based subsystem operable to execute coded instructions for generating an interactive welding environment that emulates welding setup and activity (including any tie-in operation(s)) on a section of virtual pipe having at least one virtual weld joint; a displaying means operatively connected to the logic processor-based subsystem for visually depicting the interactive welding environment, wherein the displaying means depicts the section of virtual pipe; a pendant or hand-held input device for performing setup and virtual welding activity on the at least one virtual weld joint in real time; and one or more sensors adapted to track movement of the input device in real time for communicating data about the movement of the input device to the logic processor-based subsystem. The input device will emulate controls for input selection for virtual reality welding. The logic processor-based subsystem may further include restricting controls or interactions based on a user to enhance learning objectives. The logic processor-based subsystem may optionally include teaching interaction or reactions based on visual, audible, and/or physical changes to ensure that the user can properly setup a welding environment or can effect error recovery. The logic processor-based subsystem often will include virtual calculators or tables that allow input and provide an output based on entered values. The logic processor-based subsystem may also include intelligent agent-enabled results based on incorrect setup parameters or combination of parameters. The logic processor-based subsystem may also include intelligent agent-enabled input to identify the proper setup parameters or combination of parameters which should have been entered by the user. The simulator may also include visual, audio, or physical indicators of the setup parameters or combination of parameters. A camera-based system may be optionally added to track a path of a weld, including any stops and starts along said path. The camera system may include path-following and path-determinative systems based upon a fuzzy logic controller-based system. The simulator's logic processor-based subsystem may include multiple levels for a user, each level adapted to the skill level, learning pace, and learning style of the user and artificial intelligence-based fault instruction in order to test a user's ability to detect, correct, and recover from problems. Multi-language capabilities are also an optional aspect of the invention. Cases for readily storing and transporting the simulator are also provided. Further features, advantages and embodiments are inferable from the ensueing description, drawings and claims.

### BRIEF DESCRIPTION OF THE DRAWINGS

FIG. 1 is a perspective view of an end user operator engaging in virtual welding activity with a simulator;
FIG. 2 is a front view of a simulator;
FIG. 3A is a chart showing pipe welding positions;
FIG. 3B is a chart showing plate welding positions;
FIG. 4 is an exemplary schematic block diagram of a representation of a simulator;
FIG. 5 is a side perspective view of a mock welding tool;
FIG. 6 is a close up view of a welding user interface;
FIG. 7 is a close up view of an observer display device;
FIG. 8A is a perspective view of a personalized display device;
FIG. 8B is a perspective view of a personalized display device worn by an end user;
FIG. 8C is a perspective view of a personalized display device mounted in a welding helmet;
FIG. 9 is a perspective view of a spatial tracker;
FIG. 10 is a perspective view of a stand for holding welding coupons;
FIG. 11 is a perspective view of a pipe welding coupon;
FIG. 12 is a perspective view of a pipe welding coupon mounted into the stand;
FIGS. 13A-13C illustrate an example embodiment of a pipe welding coupon;
FIG. 14 depicts a simulated welding operation on the pipe welding coupon of FIGS. 13A-13C in a virtual environment;
FIG. 15 illustrates an example embodiment of a pipe welding coupon;
FIGS. 16A-16E illustrate an example embodiment of a tie-in operation;
FIG. 17 illustrates an example embodiment of a subsystem block diagram of a logic processor-based subsystem;
FIG. 18 illustrates an example embodiment of a block diagram of a graphics processing unit (GPU) of the logic processor-based subsystem;
FIG. 19 illustrates an example embodiment of a functional block diagram of the simulator;
FIG. 20 is a flow chart of an embodiment of a method of training using the virtual reality training system;
FIGS. 21A-21B illustrate the concept of a welding pixel (wexel) displacement map;
FIG. 22 illustrates an example embodiment of a coupon space and a weld space of a flat welding coupon simulated in the simulator;
FIG. 23 illustrates an example embodiment of a coupon space and a weld space of a corner welding coupon simulated in the simulator;
FIG. 24 illustrates an example embodiment of a coupon space and a weld space of a pipe welding coupon simulated in the simulator;
FIG. 25 illustrates an example embodiment of the pipe welding coupon;
FIGS. 26A-26C illustrate an example embodiment of the concept of a dual-displacement puddle model of the simulator;
FIG. 27 illustrates an example embodiment of an orbital welding system as used in an orbital welding environment;
FIG. 28 illustrates a welding tractor for use with the orbital welding system of FIG. 27;
FIG. 29 illustrates a power source and controller of the orbital welding system of FIG. 27;
FIG. 30 illustrates a pendant for use with the orbital welding system of FIG. 27;
FIG. 31 illustrates a case for use with a portable virtual reality welding system;
FIG. 32 illustrates a user transporting the case of FIG. 31;
FIGS. 33A-33C illustrate an installation of the portable virtual reality welding system of FIG. 31;
FIGS. 34A-34B illustrate another case for implementing a portable virtual reality welding system;
FIGS. 35A-35C illustrate another case for implementing a portable virtual reality welding system; and
FIGS. 36A-36D illustrate another case for implementing a portable virtual reality welding system.

### DETAILED DESCRIPTION

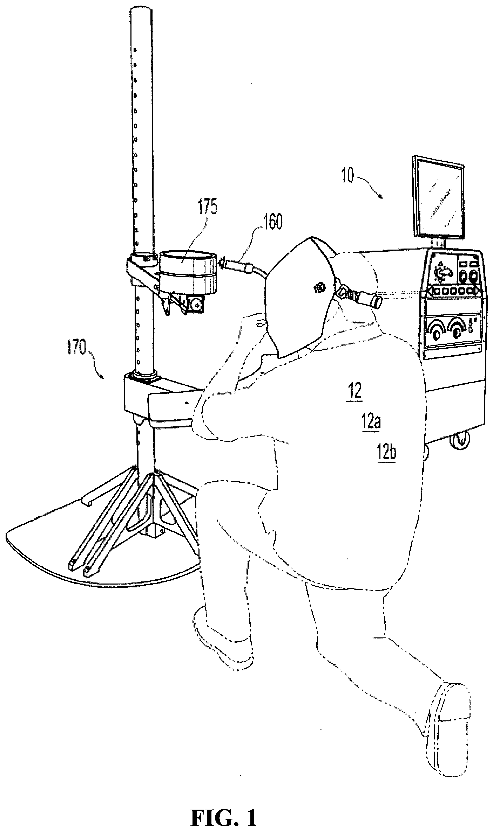

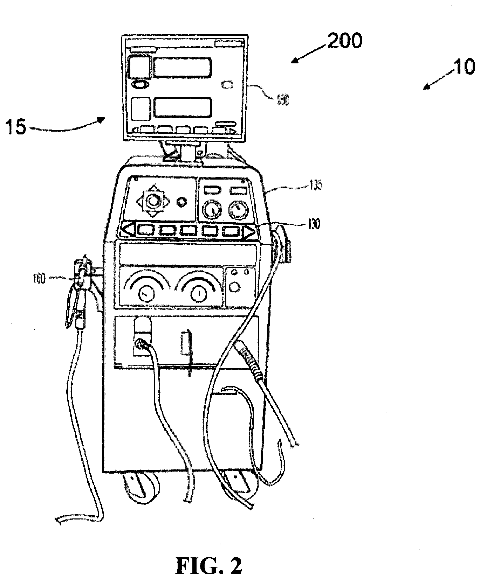

Referring now to the drawings wherein the showings are for purposes of illustrating embodiments of the invention only and not for purposes of limiting the same, FIGS. 1 and 2 show a system for simulating welding depicted generally at 10, termed herein as simulator 10 or system 10. Simulator 10 is capable of generating a virtual environment 15, which may depict a welding setting similar to that in the real world, and may be known as virtual reality arc welding (VRAW). As used herein, including the claims, the term "welding" also encompasses "cutting" operations, such as oxy-fuel cutting . Within the virtual environment 15, simulator 10 facilitates interaction with one or more end user(s) 12. An input device 155 is included that allows an end user 12 to engage in real-world activity, which is tracked by the simulator 10 and translated into virtual activity. The virtual environment 15 thus comprises an interactive virtual welding environment 15. A displaying device 200 is included that provides visual access into the virtual environment 15 and the end user's 12 activity. In one embodiment, simulator 10 may include a display screen 150 viewable by a plurality of end users 12 or other observers. Additionally, simulator 10 may include a personalized display 140 adapted for use by a single end user 12, which may be a trainee user 12a or an instructor user 12b. It is expressly noted here that the end user's 12 activity in the real world is translated into virtual welding activity and viewed on one or more displays 140, 150 in real-time. As used herein, the term "real-time" means perceiving and experiencing, in time, a virtual environment in the same way that an end user 12 would perceive and experience, in time, a real-world setting.

In generating an interactive virtual welding environment 15, simulator 10 emulates one or more welding processes for a plurality of weld joints in different welding positions and additionally emulates the effects of different kinds of electrodes for the plurality of joint configurations. In one particular embodiment, simulator 10 generates an interactive virtual welding environment 15 that emulates pipe welding and/or welding of open root joints. The system is capable of simulating a weld puddle having real-time molten metal fluidity and heat dissipation characteristics. The simulator 10 is also capable of modeling how virtual welding activity affects the weld joint, e.g., the underlying base material. Illustratively, simulator 10 may emulate welding a root pass and a hot pass, as well as subsequent filler and cap passes, each with characteristics paralleling real-world scenarios. Each subsequent pass may weld significantly different from that of the previous pass as a result of changes in the base material made during the previous pass and/or as a result of a differently selected electrode. Real-time feedback of the puddle modeling allows the end user 12 to observe the virtual welding process on the display 200 and adjust or maintain his/her technique as the virtual weld is being performed. Examples of the kinds of virtual indicators observed may include: flow of the weld puddle, shimmer of molten puddle, changes in color during puddle solidification, freeze rate of the puddle, color gradients of heat dissipation, sound, bead formation, weave pattern, formation of slag, undercut, porosity, spatter, slag entrapment, overfill, blowthrough, and occlusions to name a few. It is to be realized that the puddle characteristics are dependent upon, that is to say responsive to, the end user's 12 movement of the input device 155. In this manner, the displayed weld puddle is representative of a real-world weld puddle formed in real-time based on the selected welding process and on the end user's 12 welding technique. Furthermore, "wagon tracks" is the visual trail of weld defects and slag left behind in the toes of the root pass made during pipe welding using the SMAW process. The second pass in pipe welding, called the hot pass, must be hot enough to remelt the wagon tracks so they are eliminated in the final weldment. Also, wagon tracks may be removed by a grinding process. Such wagon tracks and elimination of the wagon tracks are properly simulated in the simulator 10 described herein, in accordance with an embodiment of the present invention.

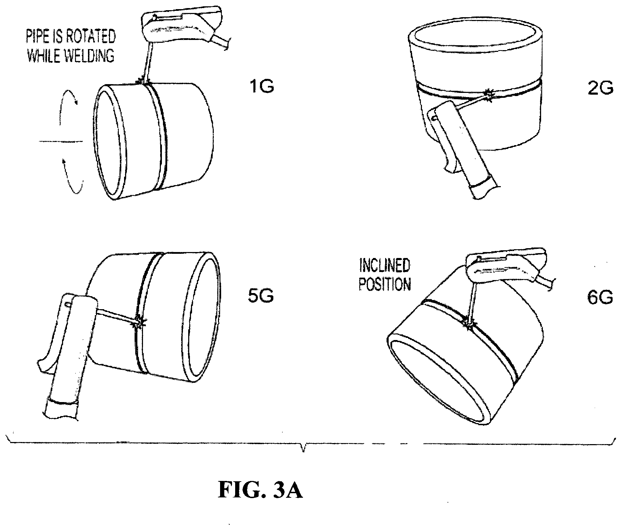

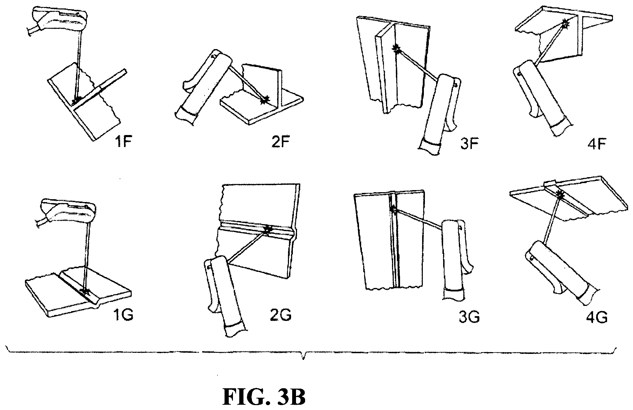

With continued reference to FIGS. 1 and 2 and now also to FIGS. 3A and 3B, simulator 10 may emulate welding processes in various welding positions and model how the weld puddle reacts in each position. More specifically, simulator 10 may emulate pipe welding in vertical, horizontal, and/or inclined positions referred to in the art respectively as the 5G, 2G, and 6G positions. Additionally, simulator 10 may emulate welding in a 1G position which relates to the rotating horizontal position of the pipe, or in a 4G position which relates to welding overhead as may be associated with a groove weld in abutting plates. Other welding positions may relate to the welding of open root joints for various configurations of flat plate. It is to be understood that the simulator 10, including a modeling and analysis engine to be described in detail in subsequent paragraphs, takes into account the effects of gravity on the weld puddle. Accordingly, the weld puddle reacts differently, for example, for a welding pipe in a 5G position from that of a 6G position. The examples above are not to be construed as limiting, but are included for illustrative purposes. Those skilled in the art will readily understand its application to any weld joint, welding position, or type of weldment including different kinds of base material.

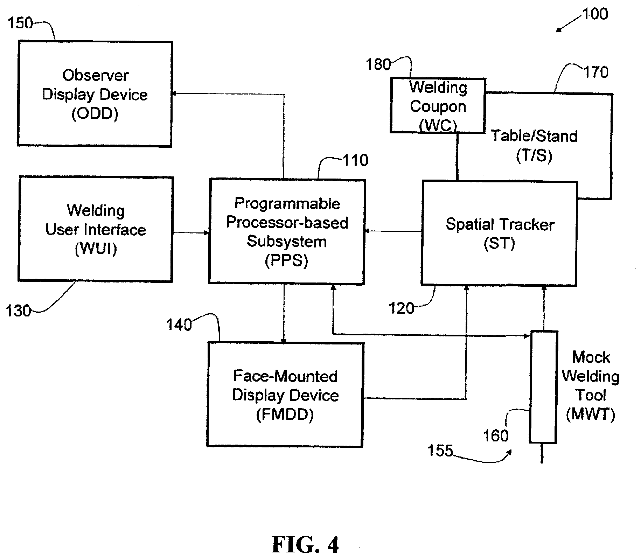

With reference now to FIGS. 2 and 4, simulator 10 includes a logic processor-based subsystem 110, which may be programmable and operable to execute coded instructions for generating the interactive virtual welding environment 15. Simulator 10 further includes sensors and/or sensor systems, which may be comprised of a spatial tracker 120, operatively connected to the logic processor-based subsystem 110. Simulator 10 also includes a welding user interface 130 in communication with the logic processor-based subsystem 110 for set up and control of the simulator 10. As referenced above, displaying device(s) 200 are included, which may comprise a face-mounted display device 140 and an observer display device 150 each connected to the logic processor-based subsystem 110 providing visual access to the interactive virtual welding environment 15. One or more of the displaying devices 200 may be connected to the spatial tracker 120 for changing the images viewed on the device in response to its position and/or movement thereof, as described below.

### Input Device

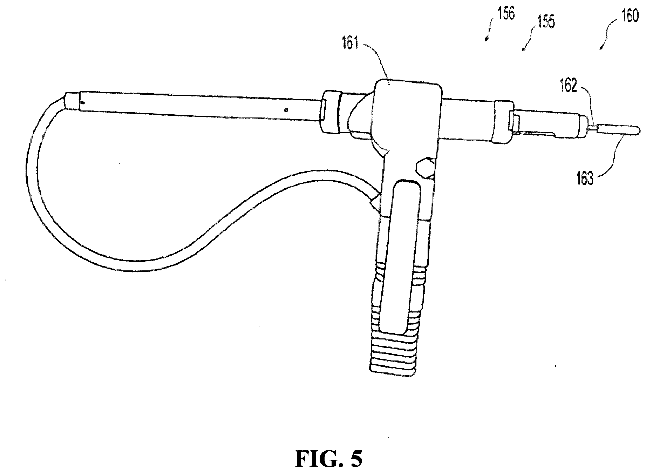

With reference now to FIG. 5, as mentioned above, simulator 10 includes an input device 155 that facilitates interaction with the end user 12. In one embodiment, input device 155 comprises a mock welding tool 160. The mock welding tool 160 may be, but does not have to be, fashioned to resemble a real-world welding tool such as, for example, a manual welding electrode holder or a weld gun delivering a continuous feed to electrode (e.g., MIG, FCAW, GTAW welding tools). Still, other configurations of the mock welding tool 160 may be implemented without departing from the intended scope of coverage of the embodiments of the subject invention. For discussion purposes, the embodiments of the subject invention will be described in the context of using a mock welding tool 160 that resembles a manual welding electrode holder 156. The mock welding tool 160 may closely resemble a real world welding tool. In one particular embodiment, mock welding tool 160 may have the same shape, weight, and feel as a real-world welding tool. In fact, a real welding tool could be used as the mock welding tool 160 to provide the actual feel of the tool in the user's hands, even though, in the simulator 10, the real welding tool would not be used to actually create a real arc. In this manner, end user 12, which maybe a trainee user 12a, becomes accustomed to handling a real-world welding tool thereby enhancing the virtual welding experience. However, the mock welding tool 160 may be constructed in any manner and configuration chosen with sound judgment.

Illustratively, mock welding tool 160 simulates a stick welding tool for pipe welding and includes a holder 161 and a simulated stick electrode 162 extending therefrom. The simulated stick electrode 162 may include a tactilely resistive tip 163 to simulate resistive feedback that occurs during welding in a real-world setting. If the end user 12 moves the simulated stick electrode 162 too far back out of the root (described in detail below), the end user 12 will be able to feel or sense the reduced resistance thereby deriving feedback for use in adjusting or maintaining the current welding process. It is contemplated that the stick welding tool may incorporate an actuator, not shown, that withdraws the simulated stick electrode 162 during the virtual welding process. That is to say that as end user 12 engages in virtual welding activity, the distance between holder 161 and the tip of the simulated stick electrode 162 is reduced to simulate consumption of the electrode. The consumption rate, i.e., withdrawal of the stick electrode 162, may be controlled by the logic processor-based subsystem 110 and more specifically by coded instructions executed by the logic processor-based subsystem 110. The simulated consumption rate may also depend on the end user's 12 technique. It is noteworthy to mention here that as simulator 10 facilitates virtual welding with different types of electrodes, the consumption rate or reduction of the stick electrode 162 may change with the welding procedure used and/or setup of the simulator 10.

The actuator of the mock welding tool 160 may be electrically driven. Power for engaging the actuator may come from the simulator 10, from an external power source, or from internal battery power. In one embodiment, the actuator may be an electromotive device, such as an electric motor. Still, any type of actuator or form of motive force may be used including, but not limited to, electromagnetic actuators, pneumatic actuators, or mechanical (e.g., spring-loaded) actuators, in any combination thereof.

As indicated above, the mock welding tool 160 may work in conjunction with the spatial tracker 120 for interacting with the simulator 10. In particular, the position and/or orientation of mock welding tool 160 may be monitored and tracked by the spatial tracker 120 in real time. Data representing the position and orientation may therefore be communicated to the logic processor-based subsystem 110 and modified or converted for use as required for interacting with the virtual welding environment 15.

### Spatial Tracker

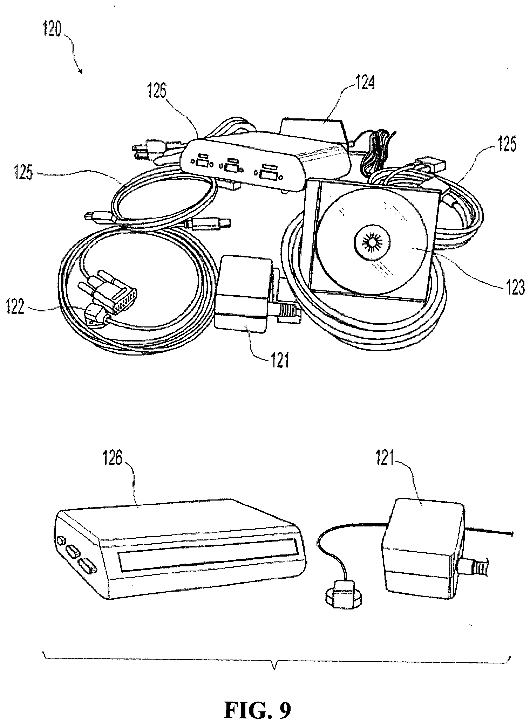

Referencing FIG. 9, an example of a spatial tracker 120 is illustrated. Spatial tracker 120 may interface with the logic processor-based subsystem 110. In one embodiment, the spatial tracker 120 may track the mock welding tool 160 magnetically. That is to say that the spatial tracker generates a magnetic envelope, which is used to determine position and orientation, as well as speed and/or changes in speed. Accordingly, the spatial tracker 120 includes a magnetic source 121 and source cable, one or more sensors 122, host software on disk 123, a power source 124, USB and RS-232 cables 125, a processor tracking unit 126, and other associated cables. The magnetic source 121 is capable of being operatively connected to the processor tracking unit 126 via cables, as are the one or more sensors 122. The power source 124 is also capable of being operatively connected to the processor tracking unit 126 via a cable. The processor tracking unit 126 is capable of being operatively connected to the logic processor-based subsystem 110 via a USB or RS-232 cable 125. The host software on disk 123 may be loaded onto the logic processor-based subsystem 110 and allows functional communication between the spatial tracker 120 and the logic processor-based subsystem 110.

The magnetic source 121 creates a magnetic field, or envelope, surrounding the magnetic source 121 defining a three dimensional space within which end user 12 activity may be tracked for interacting with the simulator 10. The envelope establishes a spatial frame of reference. Objects used within the envelope, e.g., mock welding tool 160 and coupon stand (described below), may be comprised of non-metallic, i.e., non-ferric and non-conductive, material so as not to distort the magnetic field created by the magnetic source 121. Each sensor 122 may include multiple induction coils aligned in crossing spatial directions, which may be substantially orthogonally aligned. The induction coils measure the strength of the magnetic field in each of the three directions providing information to the processor tracking unit 126. In one embodiment at least one sensor 122 is attached to the mock welding tool 160 allowing the mock welding tool 160 to be tracked with respect to the spatial frame of reference in both position and orientation. More specifically, the induction coils may be mounted in the tip of the electrode 162. In this way, simulator 10 is able to determine where within the three dimensional envelope the mock welding tool 160 is positioned. Additional sensors 122 may be provided and operatively attached to the one or more displaying devices 200. Accordingly, simulator 10 may use sensor data to change the view seen by the end user 12 responsive to the end user's 12 movements. As such, the simulator 10 captures and tracks the end user's 12 activity in the real world for translation into the virtual welding environment 15.

In accordance with an alternative embodiment of the present invention, the sensor(s) 122 may wirelessly interface to the processor tracking unit 126, and the processor tracking unit 126 may wirelessly interface to the logic processor-based subsystem 110. In accordance with other alternative embodiments of the present invention, other types of spatial trackers 120 may be used in the simulator 10 including, for example, an accelerometer/gyroscope-based tracker, an optical tracker, an infrared tracker, an acoustic tracker, a laser tracker, a radio frequency tracker, an inertial tracker, an active or passive optical tracker, and augmented reality-based tracking. Still, other types of trackers may be used without departing from the intended scope of coverage of the general inventive concepts.

### Displaying Device

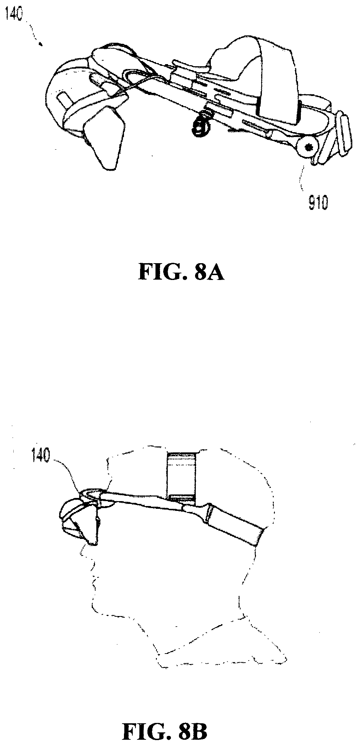

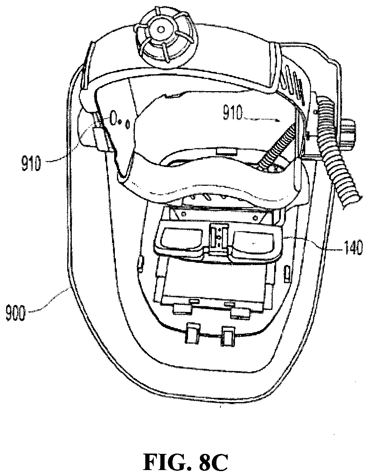

With reference now to FIG. 8A, an example of the face-mounted display device 140 will now be described. The face mounted display device 140 may be integrated into a welding helmet 900, as shown in FIG. 8C or, alternatively, may be separately mounted as shown in FIG. 8B. The face mounted display device 140 may include two high-contrast SVGA 3D OLED micro-displays capable of delivering fluid full-motion video in the 2D and frame sequential video modes. Virtual images (e.g., video) from the virtual welding environment 15 are provided and displayed on the face mounted display device 140. In one embodiment of the subject invention, the logic processor-based subsystem 110 provides stereoscopic video to the face mounted display device 140, enhancing the depth perception of the user. Stereoscopic images may be produced by a logic processing unit, which may be a graphics processing unit described in detail below. A zoom (e.g., 2x) mode may also be provided, allowing a user to simulate a cheater plate.

The face mounted display device 140 operatively connects to the logic processor-based subsystem 110 and the spatial tracker 120 via wired or wireless means. A sensor 122 of the spatial tracker 120 may be attached to the face mounted display device 140 or to the welding helmet 900 thereby allowing the face mounted display device 140 to be tracked with respect to the 3D spatial frame of reference created by the spatial tracker 120. In this way, movement of the welding helmet 900 responsively alters the image seen by the end user 12 in a 3D virtual reality setting. The face mounted display device 140 may also function to call up and display menu items similar to that of observer display device 150, as subsequently described. In this manner, an end user is therefore able to use a control on the mock welding tool 160 (e.g., a button or switch) to activate and select options from the menu. This may allow the user to easily reset a weld if he makes a mistake, change certain parameters, or back up to re-do a portion of a weld bead trajectory, for example.

The face mounted display device 140 may further include speakers 910, allowing the user to hear simulated welding-related and environmental sounds produced by the simulator 10. Sound content functionality and welding sounds provide particular types of welding sounds that change depending on if certain welding parameters are within tolerance or out of tolerance. Sounds are tailored to the various welding processes and parameters. For example, in a MIG spray arc welding process, a crackling sound is provided when the user does not have the mock welding tool 160 positioned correctly, and a hissing sound is provided when the mock welding tool 160 is positioned correctly. In a short arc welding process, a hissing sound is provided when undercutting is occurring. These sounds mimic real world sounds corresponding to correct and incorrect welding techniques.

High fidelity sound content may be taken from real world recordings of actual welding using a variety of electronic and mechanical means. The perceived volume and direction of the sound is modified depending on the position, orientation, and distance of the end user's head, i.e., the face mounted display device 140, with respect to the simulated arc between the mock welding tool 160 and the welding coupon 175. Sound may be provided to the user via speakers 910, which may be earbud speakers or any other type of speakers or sound generating device, mounted in the face mounted display device 140 or alternatively mounted in the console 135 and/or stand 170. Still, any manner of presenting sound to the end user 12 while engaging in virtual welding activity may be chosen. It is also noted here that other types of sound information may be communicated through the speakers 910. Examples include verbal instructions from the instructor user 12b, in either real time or via prerecorded messages. Prerecorded messages may be automatically triggered by particular virtual welding activity. Real time instructions may be generated on site or from a remote location. Still, any type of message or instruction may be conveyed to end user 12.

### Console

With reference now to FIGS. 2, 6, and 7, the simulator 10 may include a console 135 housing one or more components of the simulator 10. In one embodiment, the console 135 may be constructed to resemble a welding power source. That is to say that the shape and size of the console 135 may match that of a real-world device. Operation of the simulator 10 may be facilitated by a welding unit interface 130, which may be fashioned to resemble welding power source knobs, dials, and/or switches 133, 134. Simulator 10 may further include a display, which may be displaying device 200. Coded instructions, i.e., software, installed onto the simulator 10 may direct the end user's 12 interaction with the simulator 10 by displaying instructions and/or menu options on the display screen 200. Interaction with the simulator 10 may include functions relating to administrative activity, simulation set up and activation, and the like. This may further include selection of a particular welding process and electrode type, as well as part set up including welding position. Selections made by way of welding unit interface 130 are reflected on the displaying device 200.

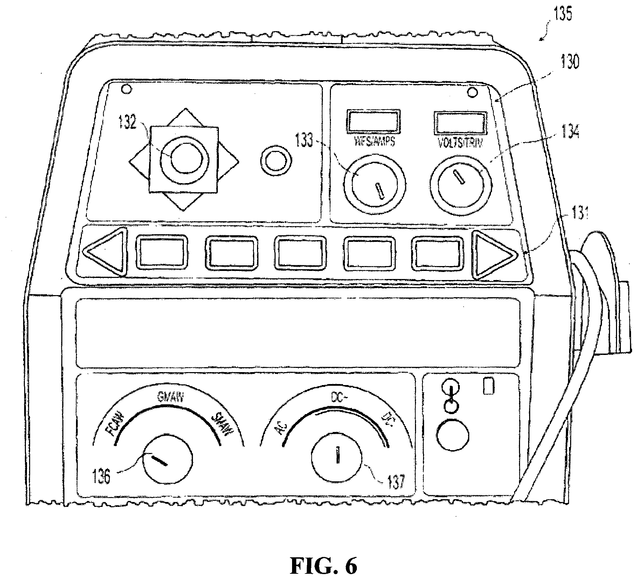

FIG. 6 illustrates an exemplary embodiment of the console 135 and welding user interface 130. The welding unit interface 130 may include a set of buttons 131 corresponding to the user selections 153 used during set up and operation of the simulator 10. The buttons 131 may be colored to correspond to colors of the user selections 153 displayed on displaying device 200. When one of the buttons 131 is pressed, a signal is sent to the logic processor-based subsystem 110 to activate the corresponding function. The welding unit interface 130 may also include a joystick 132 capable of being used by a user to select various parameters and selections displayed on the displaying device 200. The welding unit interface 130 further includes a dial or knob 133, which, in an exemplary manner, may be used for adjusting wire feed speed/amps, and another dial or knob 134 for adjusting volts/trim. The welding unit interface 130 also includes a dial or knob 136 for selecting an arc welding process. In accordance with an embodiment of the present invention, three arc welding processes are selectable including flux cored arc welding (FCAW), gas metal arc welding (GMAW), and shielded metal arc welding (SMAW). The welding unit interface 130 further includes a dial or knob 137 for selecting a welding polarity. In accordance with an embodiment of the present invention, three arc welding polarities are selectable including alternating current (AC), positive direct current (DC+), and negative direct current (DC-). Still, other welding processes and set up features may be incorporated in the simulator 10 without departing from the intended scope of coverage of the general inventive concepts, including but not limited to TIG welding embodiments. From the aforementioned, it will be readily seen that setup of the simulator 10 parallels set up of a real-world device.

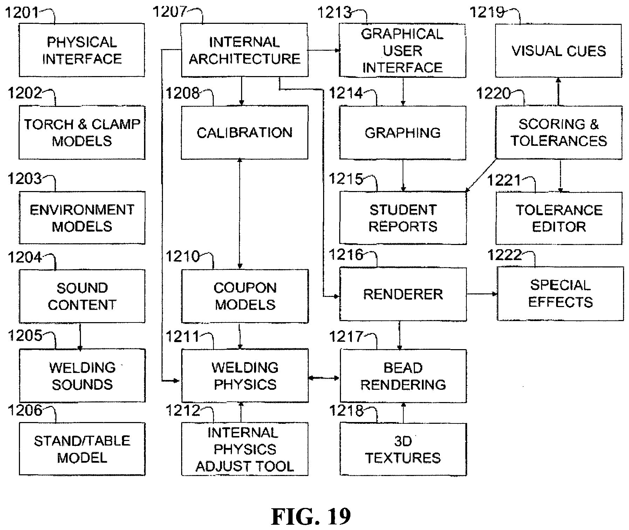

The graphical user interface functionality 1213 (see FIG. 19) allows a user, viewable via the observer display device 150 and using the joystick 132 of the physical user interface 130, to set up a welding scenario. The set up of a welding scenario may include selecting a language, entering an end user name, selecting a practice plate (e.g., a welding coupon, T-plate, flat plate), selecting a welding process (e.g., FCAW, GMAW, SMAW, TIG) and associated axial spray, pulse, or short arc mode of transfer, selecting a gas type and flow rate, selecting a type of stick electrode (e.g., E6010 or E7018), and selecting a type of flux cored wire (e.g., self-shielded, gas-shielded). The set up of a welding scenario may also include setting up a coupon stand 170 to be discussed in detail below. The set up of a welding scenario further includes selecting an environment (e.g., a background environment in virtual reality space), setting a wire feed speed, setting a voltage level, selecting a polarity, and turning particular visual cues on or off. It is noted here that in one embodiment, limitations may be incorporated into the simulator 10, which may be software limitations, that prevent operation of a given welding scenario until the appropriate settings for a selected process have been properly entered. In this way, trainee users 12a are taught or learn the proper range of real-world welding settings by setting up virtual welding scenarios.

Accordingly, displaying device 200 reflects activity corresponding to the end user selections 153 including menu, actions, visual cues, new coupon set up, and scoring. These user selections may be tied to user buttons on the console 135. As a user makes various selections via displaying device 200, the displayed characteristics can change to provide selected information and other options to the user. However, the displaying device 200, which may be an observer display device 150, may have another function, which is to display virtual images seen by the end user 12 during operation of the simulator 10, i.e., while engaging in virtual welding activity. Displaying device 200 may be set up to view the same image as seen by the end user 12. Alternatively, displaying device 200 may also be used to display a different view, or different perspective of the virtual welding activity.

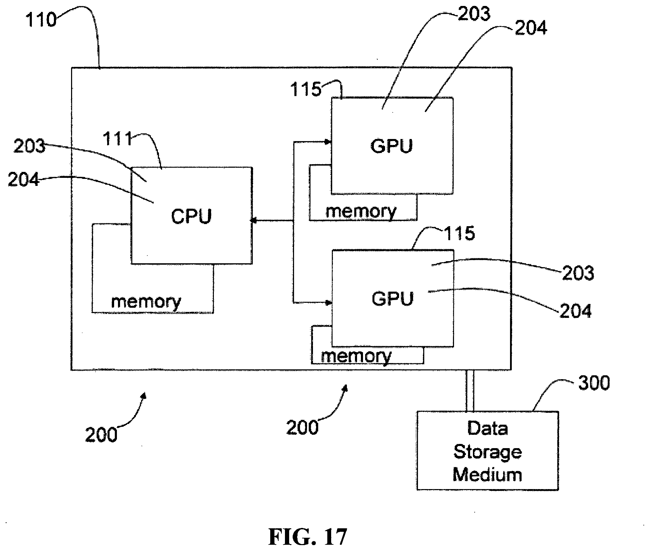

In one embodiment, displaying device 150, 200 may be used to play back virtual welding activity stored electronically on data storage devices 300, shown in FIG. 17. Data representing the end user's 12 virtual welding activity may be, for example, stored for playback and review, downloaded for archiving purposes, and/or transmitted to remote locations for viewing and critiquing in real-time. In replaying the virtual welding activity, details such as weld puddle fluidity, travel speed, as well as discontinuity states 152 including, for example, improper fillet size, poor bead placement, poor tie-in, concave bead, excessive convexity, undercut, porosity, incomplete fusion, slag entrapment, excess spatter, and burnthrough, may be represented. Undercut may also be displayed, which is the result of an out of tolerance angle. Moreover, porosity may be displayed caused by moving the arc too far away from the weldment. In this manner, the simulator 10 is capable of replaying part or all of particular virtual welding activity, modeling all aspects of the virtual welding scenario including occlusions and defects related directly to the end user's activity.

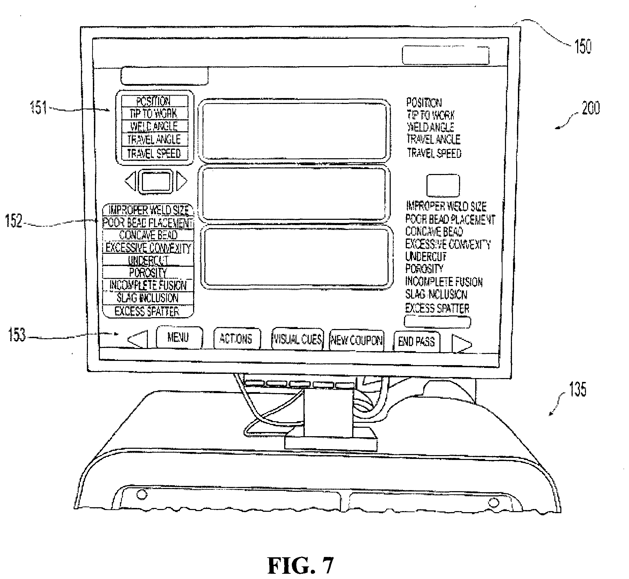

Referencing FIG. 7, simulator 10 is also capable of analyzing and displaying the results of virtual welding activity. By analyzing the results, it is meant that simulator 10 is capable of determining when during the welding pass (including any tie-ins) and where along the weld joints, the end user 12 deviated from the acceptable limits of the welding process. A score may be attributed to the end user's 12 performance. In one embodiment, the score may be a function of deviation in position, orientation, and speed of the mock welding tool 160 through ranges of tolerances, which may extend from an ideal welding pass to marginal or unacceptable welding activity. Any gradient of ranges may be incorporated into the simulator 10 as chosen for scoring the end user's 12 performance. Scoring may be displayed numerically or alpha-numerically. Additionally, the end user's 12 performance may be displayed graphically showing, in time and/or position along the weld joint, how closely the mock welding tool traversed the weld joint. Parameters such as travel angle, work angle, speed, and distance from the weld joint are examples of what may be measured, although any parameters may be analyzed for scoring purposes. For example, performance of a tie-in procedure, as described herein, can be analyzed and scored. The tolerance ranges of the parameters are taken from real-world welding data, thereby providing accurate feedback as to how the end user will perform in the real world. In another embodiment, analysis of the defects corresponding to the end user's 12 performance may also be incorporated and displayed on the displaying device 150, 200. In this embodiment, a graph may be depicted indicating what type of discontinuity resulted from measuring the various parameters monitored during the virtual welding activity. While occlusions may not be visible on the displaying device 200, defects may still have occurred as a result of the end user's 12 performance, the results of which may still be correspondingly displayed, e.g., graphed.

Displaying device 200 may also be used to display tutorial information used to train an end user 12. Examples of tutorial information may include instructions, which may be displayed graphically as depicted by video or pictures. Additionally, instructions may be written or presented in audio format, mentioned above. Such information may be stored and maintained on the data storage devices 300. In one embodiment, simulator 10 is capable of displaying virtual welding scenes showing various welding parameters 151 including position, tip to work, weld angle, travel angle, and travel speed, termed herein as visual cues.

In one embodiment, remote communications may be used to provide virtual instruction by offsite personnel, i.e., remote users, working from similarly or dissimilarly constructed devices, i.e., simulators. Portraying a virtual welding process may be accomplished via a network connection including but not limited to the internet, LANs, and other means of data transmission. Data representing a particular weld (including performance variables) may be sent to another system capable of displaying the virtual image and/or weld data. It should be noted that the transmitted data is sufficiently detailed for allowing remote user(s) to analyze the welder's performance. Data sent to a remote system may be used to generate a virtual welding environment thereby recreating a particular welding process. Still, any way of communicating performance data or virtual welding activity to another device may be implemented without departing from the intended scope of coverage of the embodiments of the subject invention.

### Welding Coupon

With reference now to FIGS. 1, 11, and 12, simulator 10 may include a welding coupon 175 that resembles pipe sections juxtaposed to form a welding joint 176. The welding coupon 175 may work in conjunction with the simulator 10 serving as a guide for the end user 12 while engaging in virtual welding activity. A plurality of welding coupons 175 may be used, that is to say interchanged for use, in a given cycle of virtual welding activity. The types of welding coupons may include cylindrical pipe sections, arcuate pipe segments, flat plate, T-plate, and boss weld joints, just to name a few. In one embodiment, each of the welding coupons may incorporate open root joints or grooves. However, any configurations of weld joints may be incorporated into a welding coupon without departing from the intended scope of coverage of the embodiments of the subject invention.

The dimensions of welding coupons 175 may vary. For cylindrical pipe, the range of inside diameters may extend from 11/2 inches (inside diameter) to 18 inches (inside diameter). In one particular embodiment, the range of inside diameters may exceed 18 inches. In another embodiment, arcuate pipe segments may have a characteristic radius in the range extending from 11/2 inches (inside diameter) up to and exceeding 18 inches (inside diameter). Furthermore, it is to be construed that any inside diameter of welding coupon 175 may be utilized, both those smaller than 11/2 inches and those exceeding 18 inches. In a practical sense, any size of welding coupon 175 can be used as long as the welding coupon 175, or a portion of the welding coupon 175, fits within the envelope generated by the spatial tracker 120. Flat plate may extend up to and exceed 18 inches in length as well. Still, it is to be understood that the upper dimensional limits of a welding coupon 175 are constrained only by the size and strength of the sensing field generated by the spatial tracker 120 and its ability to be positioned respective of the welding coupon 175. All such variations are to be construed as falling within the scope of coverage of the embodiments of the subject invention.

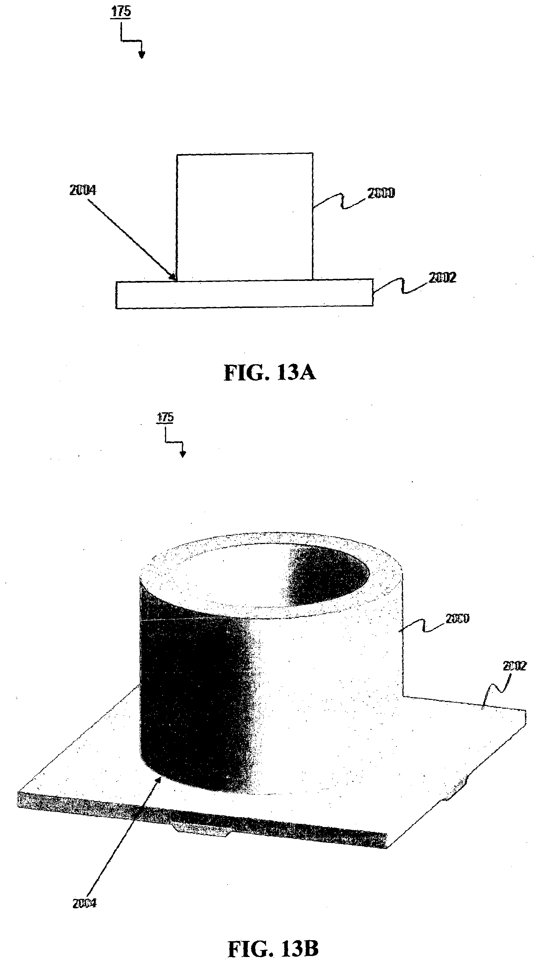

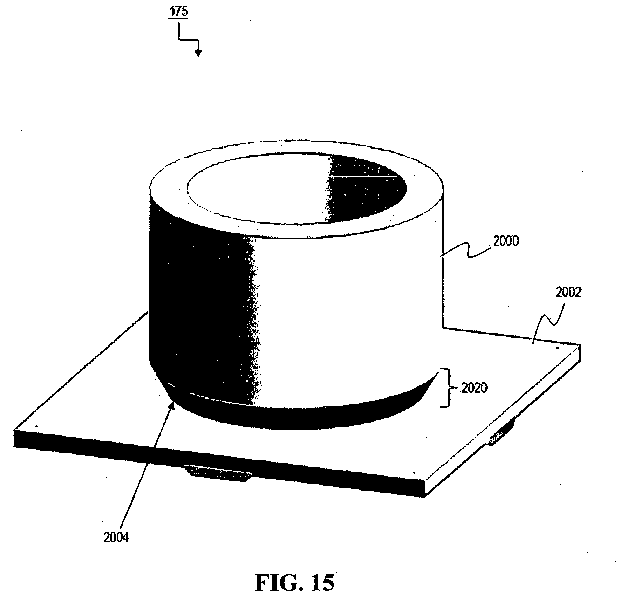

In one embodiment, the welding coupon 175 includes a pipe 2000 or pipe section interfaced with a plate 2002 that is flat, planar, or the like. In this manner, the welding coupon 175 can emulate a pipe-on-plate weld, sometimes referred to as a boss weld (see FIGS. 13A-13C and 15). An outer circumference of where the pipe 2000 interfaces with or otherwise contacts the plate 2002 forms a weld path 2004. A shape of the weld path 2004 will typically correspond to a shape of the pipe 2000. The weld path 2004 is a path that a mock welding tool 2010 (e.g., the mock welding tool 160) is expected to traverse when welding the pipe 2000 and plate 2002 to one another.

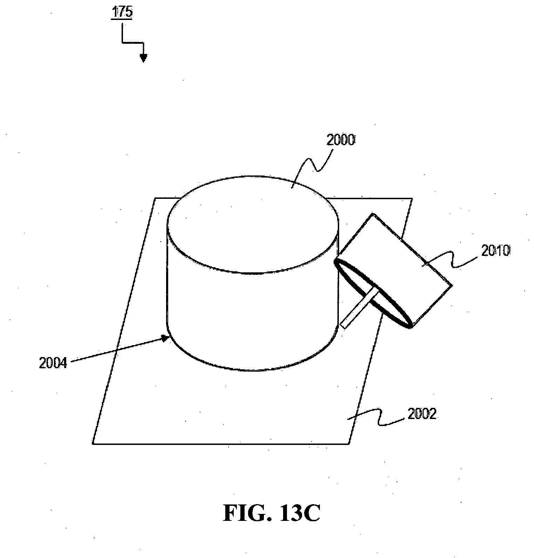

In one embodiment, the pipe 2000 and the plate 2002 interface to form a fillet joint (see FIGS. 13A-13C). FIG. 13A is a side elevational view of the pipe 2000 and the plate 2002. FIG. 13B is a perspective view of the pipe 2000 and the plate 2002. FIG. 13C is another perspective view of the pipe 2000 and the plate 2002 with the mock welding tool 2010 in position to weld along the weld path 2004.

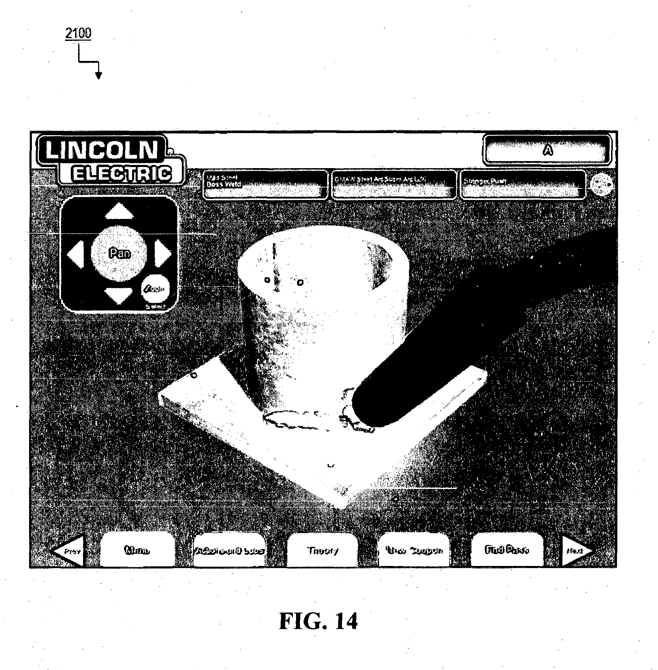

FIG. 14 is an image 2100 showing how the simulated operation of welding the fillet joint at the interface of the pipe 2000 and the plate 2002 might look to a user (e.g., the user 12). For example, the image 2100 could be displayed on any suitable display device (e.g., the displaying device 200). In this manner, the image 2100 could be displayed on the observer display device 150. Furthermore, the image 2100 shows what the user might see in his face-mounted display device 140.

In one embodiment, a lower section 2020 of the pipe 2000 includes a beveled or grooved section to form a groove joint (see FIG. 15). Thus, the pipe 2000 and the plate 2002 interface to form the grooved joint. FIG. 15 is a perspective view of the pipe 2000 and the plate 2002.

When welding certain weld joints, such as the fillet joint of FIGS. 13A-13C, the groove joint of FIG. 15, a corner joint, or the like, an experienced welder may be able to traverse the entire weld path (e.g., the weld path 2004) in a single pass. However, environmental obstacles or other constraints (e.g., fatigue, distraction) may require that a user only traverse a portion of the weld path, stop momentarily (e.g., to reposition his body relative to the weld), and then resume traversing the weld path. Likewise, an inexperienced welder (e.g., the trainee welder 12a) may feel more comfortable or otherwise benefit from breaking up a long weld pass (e.g., a 360 degree weld pass) into two or more smaller weld passes (e.g., a first 180 degree weld pass and a second 180 degree weld pass). The joining or connecting of two different weld passes is called a tie-in.

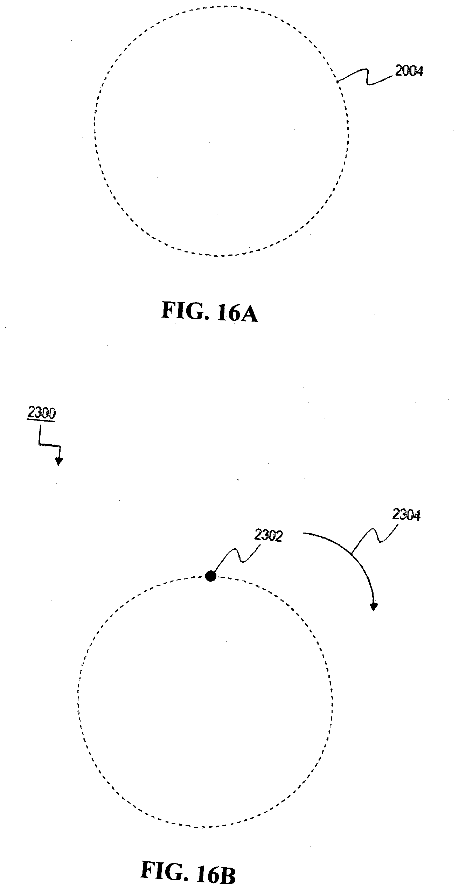

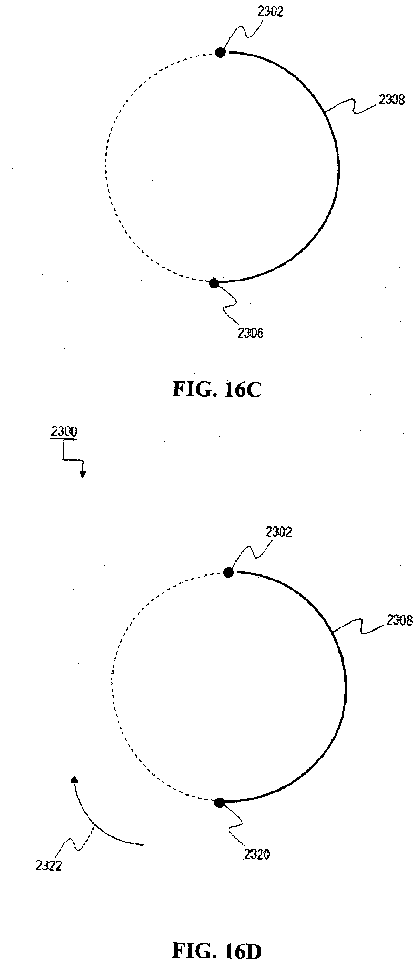

In one embodiment, a tie-in operation 2300 (e.g., as shown in FIGS. 16A-16E) is emulated in the simulator 10. In this manner, the tie-in operation can be performed and practiced/taught, scored, etc. As shown in FIG. 16A, the weld path 2004 for the fillet joint at the interface of the pipe 2000 and the plate 2002 (see FIG. 13B) is circular. In welding the fillet joint, the user positions the mock welding tool 2010 to begin welding at a first point 2302 on the weld path 2004 (see FIG. 16B). The user then moves the mock welding tool 2010 along the weld path 2004 in the direction of the arrow 2304. The user moves the mock welding tool 2010 along the weld path 2004 until a second point 2306 is reached, at which time welding is temporarily suspended, thereby completing a first weld pass 2308 (see FIG. 16C). Typically the first weld pass will substantially solidify during this period of non-welding.

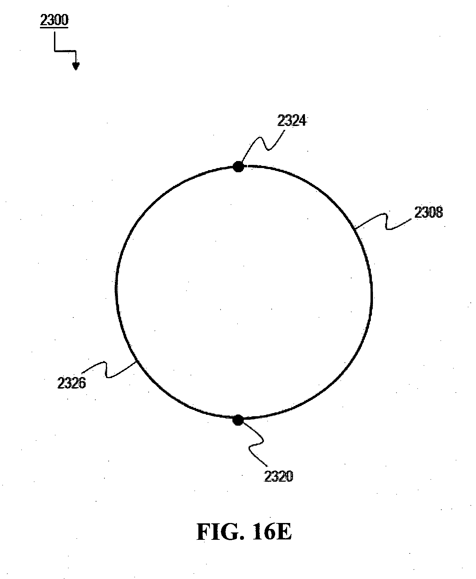

As the user prepares to begin a second weld pass 2326, it is important that the second weld pass 2326 is tied-in to the first weld pass 2308. Accordingly, the user positions the mock welding tool 2010 to begin welding at a third point 2320 on the weld path 2004 that at least partially overlaps the second point 2306 on the weld path 2004 where the first weld pass 2308 ended (see FIG. 16D). By beginning the second weld pass 2326 at a point that at least partially overlaps or is otherwise merged with the first weld pass 2308, the second weld pass 2326 will be tied-in with the first weld pass 2308. The user then moves the mock welding tool 2010 along the weld path 2004 in the direction of the arrow 2322. The user moves the mock welding tool 2010 along the weld path 2004 until a fourth point 2324 is reached, at which time welding is halted, thereby completing the second weld pass 2326 (see FIG. 16E). Again, the fourth point 2324 on the weld path 2004 at least partially overlaps with the first point 2302 on the weld path 2004.

The first weld pass 2308 and the second weld pass 2326, which are tied-in to one another, form the fillet joint weld between the pipe 2000 and the plate 2002.

As mentioned above, the welding coupon 175 may be constructed from a material that does not interfere with the spatial tracker 120. For spatial trackers generating a magnetic field, the welding coupon 175 may be constructed from nonferrous and non-conductive material. However, any type of material may be chosen that is suitable for use with the type of spatial tracker 120 or other sensors selected.

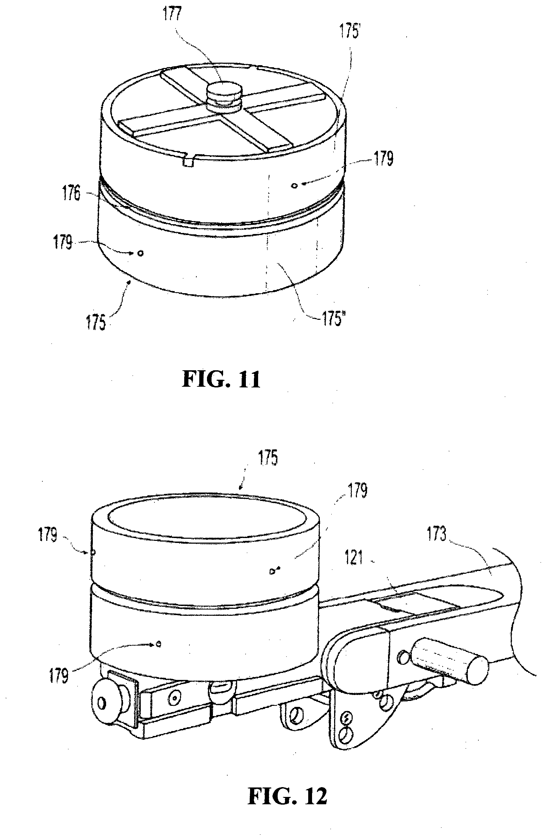

Referencing FIGS. 11-12, 13A-13C, and 15, the welding coupon 175 may be constructed so that it fits into a table or stand 170, which functions (at least in part) to hold the welding coupon 175 constant with respect to the spatial tracker 120. Accordingly, the welding coupon 175 may include a connecting portion 177 or connector, as shown in FIGS. 11-12. The connecting portion 177 may extend from one side of the welding coupon 175, which as illustrated may be the bottom side (e.g., a bottom surface of the plate 2002), and may be received into a mechanical interlocking device included with the stand 170. It will be appreciated that the orientation at which the welding coupon 175 is inserted into the stand 170 may need to be constant, i.e., repeatable, for closely matching the virtual weldment, i.e., pipe, created within the virtual welding environment 15. In this manner, as long as the simulator 10 is aware of how the position of the welding coupon 175 has changed, adjustments to the virtual counterpart may be made accordingly. For example, during set up, the end user 12 may select the size of pipe to be welded on. The end user 12 may then insert the appropriate welding coupon 175 into the stand 170, locking it into position. Subsequently, the end user 12 may choose a desired welding position making the selection via the welding user interface 130. As will be described below, the stand 170 may then be tilted or adjusted to position the welding coupon 175 in any of the welding positions recognized by the simulator 10. Of course, it will be appreciated that adjusting the position of the welding coupon 175 also adjusts the position of the spatial tracker 120 thereby preserving the relative position of the welding coupon 175 within the sensory tracking field.

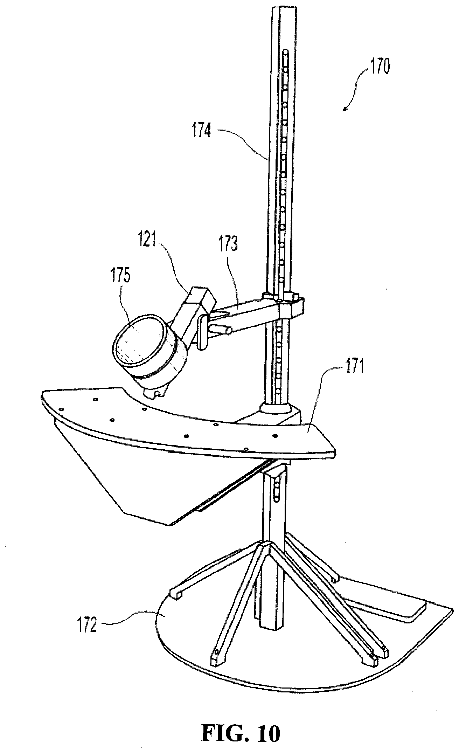

FIG. 10 depicts one embodiment of the stand 170. The stand 170 may include an adjustable table 171, a stand base 172, an adjustable arm 173, and a vertical post 174. The table 171 and the arm 173 are respectively attached to the vertical post 174. The table 171 and the arm 173 are each capable of being adjusted along the height of the vertical post 174, which may include upward, downward, and/or rotational movement with respect to the vertical post 174. The arm 173 is used to hold the welding coupon 175, in a manner consistent with that discussed herein. The table 171 may assist the end user 12 by allowing his/her arms to rest on the table 171 during use. In one particular embodiment, the vertical post 174 is indexed with position information such that a user may know exactly where the arm 173 and the table 171 are positioned. This information may also be entered into the simulator 10 by way of the welding user interface 130 and the displaying device 150 during set up.

An alternative embodiment of the subject invention is contemplated wherein the positions of the table 171 and the arm 173 are automatically adjusted responsive to selections made during set up of the simulator 10. In this embodiment, selections made via the welding user interface 130 may be communicated to the logic processor-based subsystem 110. Actuators and feedback sensors employed by the stand 170 may be controlled by the logic processor-based subsystem 110 for positioning the welding coupon 175 without physically moving the arm 173 or the table 171. In one embodiment, the actuators and feedback sensors may comprise electrically driven servomotors. However, any locomotive device may be used to automatically adjust the position of the stand 170 as chosen with sound engineering judgment. In this manner, the process of setting up the welding coupon 175 is automated and does not require manual adjustment by the end user 12.

Another embodiment of the subject invention includes the use of intelligence devices used in conjunction with the welding coupon 175, termed herein as "smart" coupons 175. In this embodiment, the welding coupon 175 includes a device having information about that particular welding coupon 175 that may be sensed by the stand 170. In particular, the arm 173 may include detectors that read data stored on or within the device located on the welding coupon 175. Examples may include the use of digital data encoded on a sensor, e.g., micro-electronic device, that may be read wirelessly when brought into proximity of the detectors. Other examples may include the use of passive devices like bar coding. Still any manner of intelligently communicating information about the welding coupon 175 to the logic processor-based subsystem 110 may be chosen with sound engineering judgment.

The data stored on the welding coupon 175 may automatically indicate, to the simulator 10, the kind of welding coupon 175 that has been inserted in the stand 170. For example, a 2-inch pipe coupon may include information related to its diameter. Alternatively, a flat plate coupon may include information that indicates the kind of weld joint included on the coupon, e.g., a groove weld joint or a butt weld joint, as well as its physical dimensions. In this manner, information about the welding coupon 175 may be used to automate that portion of the setup of the simulator 10 related to selecting and installing a welding coupon 175.

Calibration functionality 1208 (see FIG. 19) provides the capability to match up physical components in real world space (3D frame of reference) with visual components in the virtual welding environment 15. Each different type of welding coupon 175 is calibrated in the factory by mounting the welding coupon 175 to the arm 173 of the stand 170 and touching the welding coupon 175 at predefined points 179 (indicated by, for example, three dimples 179 on the welding coupon 175) with a calibration stylus operatively connected to the stand 170. The simulator 10 reads the magnetic field intensities at the predefined points 179, provides position information to the logic processor-based subsystem 110, and the logic processor-based subsystem 110 uses the position information to perform the calibration (i.e., the translation from real world space to virtual reality space).

Any part of the same type of welding coupon 175, accordingly, fits into the arm 173 of the stand 170 in the same repeatable way to within very tight tolerances. Therefore, once a particular type welding coupon 175 is calibrated, repeated calibration of similar coupons is not necessary, i.e., calibration of a particular type of welding coupon 175 is a one-time event. Stated differently, welding coupons 175 of the same type are interchangeable. Calibration ensures that physical feedback perceived by the user during a welding process matches up with what is displayed to the user in virtual reality space, making the simulation seem more real. For example, if the user slides the tip of a mock welding tool 160 around the corner of an actual welding coupon 175, the user will see the tip sliding around the corner of the virtual welding coupon on the displaying device 200 as the user feels the tip sliding around the actual corner. In accordance with an embodiment of the present invention, the mock welding tool 160 may also be placed in a pre-positioned jig and calibrated in a similar manner, based on the known jig position.

In accordance with another embodiment of the subject invention, the welding coupons 175 are "smart" coupons that include sensors which allow the simulator 10 to track the pre-defined calibration point, or corners of the "smart" coupon. The sensors may be mounted on the welding coupon 175 at the precise location of the predefined calibration points. However, any manner of communicating calibration data to the simulator 10 may be chosen. Accordingly, the simulator 10 continuously knows where the "smart" coupon is in real world 3D space. Furthermore, licensing keys may be provided to "unlock" welding coupons 175. When a particular welding coupon 175 is purchased, a licensing key may be provided that allows the end user 12a, 12b to enter the licensing key into the simulator 10, unlocking the software associated with that particular welding coupon 175. In an alternative embodiment, special non-standard welding coupons may be made or otherwise provided based on real-world CAD drawings of parts.

With reference now to FIGS. 2, 4 and 10, as mentioned above, simulator 10 includes a logic processor-based subsystem 110, which may comprise programmable electronic circuitry 200 for executing coded instructions used to generate the virtual welding environment 15. The programmable electronic circuitry 200 may include one or more logic processors 203 or logic processor-based systems 203, which may be comprised of one or more microprocessors 204. In one particular embodiment, the programmable electronic circuitry 200 may be comprised of central processing unit(s) (CPU) and graphics processing unit(s) (GPU), to be discussed further below. Additional circuitry may be included, like for example electronic memory, i.e., RAM, ROM, as well as other peripheral support circuitry. It is noted that electronic memory may be included for both the CPU and the GPU, each of which may be separately programmable for use in rendering aspects of the virtual welding environment 15 as described herein. Moreover, the programmable electronic circuitry 200 may include and utilize data storage devices 300 such as hard disk drives, optical storage devices, flash memory and the like. Still other types of electronic circuitry may be included that facilitate the transfer of data between devices within the simulator 10 or between different simulators 10. This may include, for example, receiving data from one or more input devices 155, e.g., spatial tracker or sensor, or transferring data over one or more networks which may be a local area network (LAN), a wide area network (WAN), and/or the Internet. It is to be understood that the aforementioned devices and processes are exemplary in nature and should not be construed as limiting. In fact, any form of programmable circuitry, support circuitry, communication circuitry, and/or data storage may be incorporated into the embodiments of the subject invention as chosen with sound engineering judgment.

FIG. 17 illustrates an example embodiment of a subsystem block diagram of the logic processor-based subsystem 110 of the simulator 10. The logic processor-based subsystem 110 may include a central processing unit (CPU) 111 and two graphics processing units (GPU) 115. The two GPUs 115 may be programmed to provide virtual reality simulation of a weld puddle having real-time molten metal fluidity as well as heat absorption and dissipation characteristics.

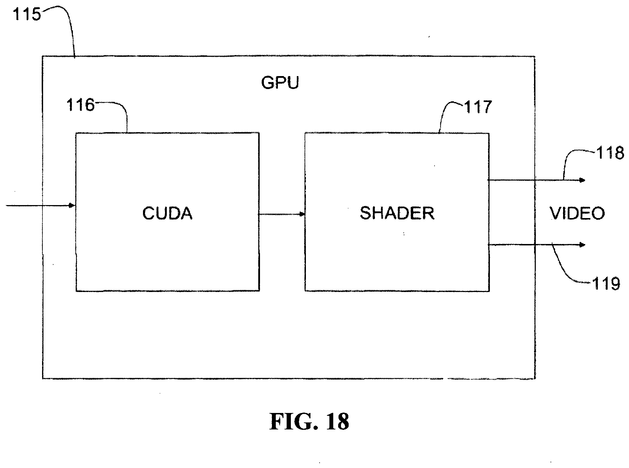

With reference to FIG. 18, a block diagram of the graphics processing unit (GPU) 115 is shown. Each GPU 115 supports the implementation of data parallel algorithms. In accordance with an embodiment of the present invention, each GPU 115 provides two video outputs 118 and 119 capable of providing two virtual reality views. Two of the video outputs may be routed to the face-mounted display device 140, rendering the welder's point of view, and a third video output may be routed to the observer display device 150, for example, rendering either the welder's point of view or some other point of view. The remaining fourth video output may be routed to a projector, for example, or used for any other purpose suitable for simulating a virtual welding environment 15. Both GPUs 115 may perform the same welding physics computations but may render the virtual welding environment 15 from the same or different points of view. The GPU 115 includes a computed unified device architecture (CUDA) 116 and a shader 117. The CUDA 116 is the computing engine of the GPU 115 which is accessible to software developers through industry standard programming languages. The CUDA 116 includes parallel cores and is used to run the physics model of the weld puddle simulation described herein. The CPU 111 provides real-time welding input data to the CUDA 116 on the GPU 115. In one particular embodiment, the shader 117 is responsible for drawing and applying all of the visuals of the simulation. Bead and puddle visuals are driven by the state of a wexel displacement map which is described later herein. In accordance with an embodiment of the present invention, the physics model runs and updates at a rate of about 30 times per second.

FIG. 19 illustrates an example embodiment of a functional block diagram of the simulator 10. The various functional blocks of the simulator 10 may be implemented largely via software instructions and modules running on the logic processor-based subsystem 110. The various functional blocks of the simulator 10 include a physical interface 1201, torch and clamp models 1202, environment models 1203, sound content functionality 1204, welding sounds 1205, stand/table model 1206, internal architecture functionality 1207, calibration functionality 1208, coupon models 1210, welding physics 1211, internal physics adjustment tool (tweaker) 1212, graphical user interface functionality 1213, graphing functionality 1214, student reports functionality 1215, renderer 1216, bead rendering 1217, 3D textures 1218, visual cues functionality 1219, scoring and tolerance functionality 1220, tolerance editor 1221, and special effects 1222.

The internal architecture functionality 1207 provides the higher level software logistics of the processes of the simulator 10 including, for example, loading files, holding information, managing threads, turning the physics model on, and triggering menus. The internal architecture functionality 1207 runs on the CPU 111, in accordance with an embodiment of the present invention. Certain real-time inputs to the logic processor-based subsystem 110 include arc location, gun position, face-mounted display device or helmet position, gun on/off state, and contact made state (yes/no).

During a simulated welding scenario, the graphing functionality 1214 gathers user performance parameters and provides the user performance parameters to the graphical user interface functionality 1213 for display in a graphical format (e.g., on the observer display device 150). Tracking information from the spatial tracker 120 feeds into the graphing functionality 1214. The graphing functionality 1214 includes a simple analysis module (SAM) and a whip/weave analysis module (WWAM). The SAM analyzes user welding parameters including welding travel angle, travel speed, weld angle, position, and tip to work by comparing the welding parameters to data stored in bead tables. The WWAM analyzes user whipping parameters including dime spacing, whip time, and puddle time. The WWAM also analyzes user weaving parameters including width of weave, weave spacing, and weave timing. The SAM and WWAM interpret raw input data (e.g., position and orientation data) into functionally usable data for graphing. In one emboidment, the SAM, the WWAM, and/or some other module is used to track, graph, or otherwise account for tie-in operations, as described herein. For each parameter analyzed by the SAM, the WWAM, and/or other related module, a tolerance window is defined by parameter limits around an optimum or ideal set point input into bead tables using the tolerance editor 1221, and scoring and tolerance functionality 1220 is performed.

The tolerance editor 1221 includes a weldometer which approximates material usage, electrical usage, and welding time. Furthermore, when certain parameters are out of tolerance, welding discontinuities (i.e., welding defects) may occur. The state of any welding discontinuities are processed by the graphing functionality 1214 and presented via the graphical user interface functionality 1213 in a graphical format. Such welding discontinuities include fillet size, poor bead placement, improper tie-in, concave bead, excessive convexity, undercut, porosity, incomplete fusion, slag entrapment, and excess spatter. In accordance with an embodiment of the present invention, the level or amount of a discontinuity is dependent on how far away a particular user parameter is from the optimum or ideal set point.

Different parameter limits may be pre-defined for different types of users such as, for example, welding novices, welding experts, and persons at a trade show. The scoring and tolerance functionality 1220 provide number scores depending on how close to optimum (ideal) a user is for a particular parameter and depending on the level of discontinuities or defects present in the weld. Information from the scoring and tolerance functionality 1220 and from the graphics functionality 1214 may be used by the student reports functionality 1215 to create a performance report for an instructor and/or a student.

Visual cues functionality 1219 provides immediate feedback to the user by displaying overlaid colors and indicators on the face mounted display device 140 and/or the observer display device 150. Visual cues are provided for each of the welding parameters 151 including position, tip to work, weld angle, travel angle, and travel speed and visually indicate to the user if some aspect of the user's welding technique should be adjusted based on the predefined limits or tolerances. Visual cues may also be provided for whip/weave technique, weld bead "dime" spacing, and proper tie-in technique, for example.

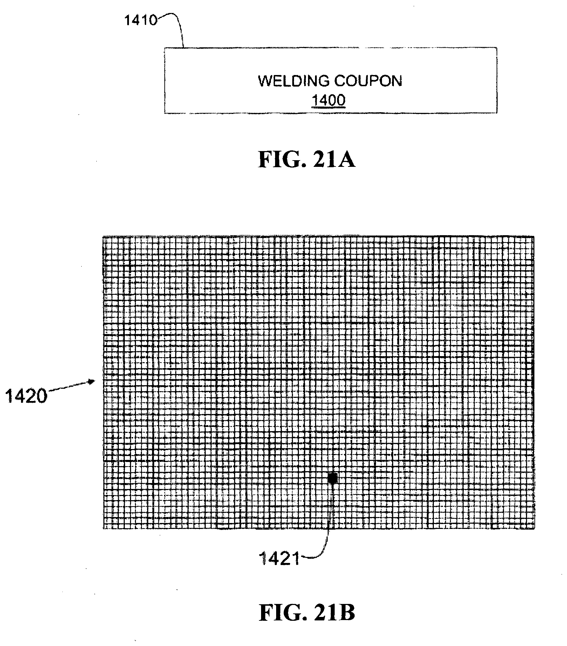

In accordance with an embodiment of the present invention, simulation of a weld puddle or pool in virtual reality space is accomplished where the simulated weld puddle has real-time molten metal fluidity and heat dissipation characteristics. At the heart of the weld puddle simulation is the welding physics functionality 1211 (a.k.a., the physics model) which may be executed on the GPUs 115, in accordance with an embodiment of the present invention. The welding physics functionality employs a double displacement layer technique to accurately model dynamic fluidity/viscosity, solidity, heat gradient (heat absorption and dissipation), puddle wake, and bead shape, and is described in more detail herein with respect to FIGS. 21A-21B.

The welding physics functionality 1211 communicates with the bead rendering functionality 1217 to render a weld bead in all states from the heated molten state to the cooled solidified state. The bead rendering functionality 1217 uses information from the welding physics functionality 1211 (e.g., heat, fluidity, displacement, dime spacing) to accurately and realistically render a weld bead in virtual reality space in real-time. The 3D textures functionality 1218 provides texture maps to the bead rendering functionality 1217 to overlay additional textures (e. g., scorching, slag, grain) onto the simulated weld bead. The renderer functionality 1216 is used to render various non-puddle specific characteristics using information from the special effects module 1222 including sparks, spatter, smoke, arc glow, fumes, and certain discontinuities such as, for example, undercut and porosity.

The internal physics adjustment tool 1212 is a tweaking tool that allows various welding physics parameters to be defined, updated, and modified for the various welding processes. In accordance with an embodiment of the present invention, the internal physics adjustment tool 1212 runs on the CPU 111, and the adjusted or updated parameters are downloaded to the GPUs 115. The types of parameters that may be adjusted via the internal physics adjustment tool 1212 include parameters related to welding coupons, process parameters that allow a process to be changed without having to reset a welding coupon (allows for doing a second pass), various global parameters that can be changed without resetting the entire simulation, and other various parameters.

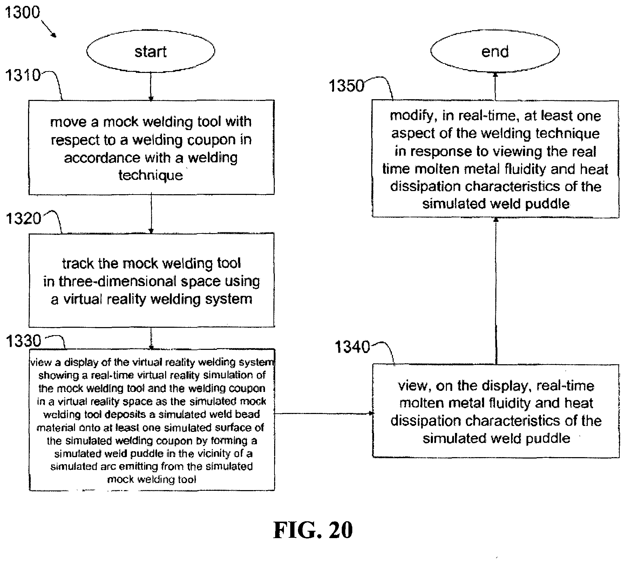

FIG. 20 is a flow chart of an embodiment of a method 1300 of training using the virtual reality training simulator 10. In step 1310, move a mock welding tool with respect to a welding coupon in accordance with a welding technique. In step 1320, track position and orientation of the mock welding tool in three-dimensional space using a virtual reality system. In step 1330, view a display of the virtual reality welding system showing a real-time virtual reality simulation of the mock welding tool and the welding coupon in a virtual reality space as the simulated mock welding tool deposits a simulated weld bead material onto at least one simulated surface of the simulated welding coupon by forming a simulated weld puddle in the vicinity of a simulated arc emitting from said simulated mock welding tool. In step 1340, view on the display, real-time molten metal fluidity and heat dissipation characteristics of the simulated weld puddle. In step 1350, modify in real-time, at least one aspect of the welding technique in response to viewing the real-time molten metal fluidity and heat dissipation characteristics of the simulated weld puddle. In one embodiment, the welding technique includes a tie-in operation, as described herein.

The method 1300 illustrates how a user is able to view a weld puddle in virtual reality space and modify his welding technique in response to viewing various characteristics of the simulated weld puddle, including real-time molten metal fluidity (e.g., viscosity) and heat dissipation. The user may also view and respond to other characteristics including real-time puddle wake and dime spacing. Viewing and responding to characteristics of the weld puddle is how many welding operations are actually performed in the real world. The double displacement layer modeling of the welding physics functionality 1211 run on the GPUs 115 allows for such real-time molten metal fluidity and heat dissipation characteristics to be accurately modeled and represented to the user. For example, heat dissipation determines solidification time (i.e., how much time it takes for a wexel to completely solidify).

Furthermore, a user may make a second pass over the weld bead material using the same or a different (e.g., a second) mock welding tool, welding electrode, and/or welding process. In such a second pass scenario, the simulation shows the simulated mock welding tool, the welding coupon, and the original simulated weld bead material in virtual reality space as the simulated mock welding tool deposits a second simulated weld bead material merging with the first simulated weld bead material by forming a second simulated weld puddle in the vicinity of a simulated arc emitting from the simulated mock welding tool. Additional subsequent passes using the same or different welding tools or processes may be made in a similar manner. In any second or subsequent pass, the previous weld bead material is merged (as a form of tie-in) with the new weld bead material being deposited as a new weld puddle is formed in virtual reality space from the combination of any of the previous weld bead material, the new weld bead material, and possibly the underlying coupon material in accordance with certain embodiments of the present invention. Such subsequent passes may be performed to repair a weld bead formed by a previous pass, for example, or may include a heat pass and one or more gap closing passes after a root pass is done in pipe welding. In accordance with various embodiments of the present invention, base and weld bead material may be simulated to include mild steel, stainless steel, and aluminum.

As noted above, the merging of multiple weld passes is termed a "tie-in". The second or subsequent weld pass may be performed parallel to and at least partially on top of a first or prior weld pass. Another type of tie-in is when a weld pass is interrupted or otherwise halted prior to traversing the complete weld path. Thereafter, the user starts a new weld pass on the weld path, wherein the new weld pass overlaps or is otherwise interfaced with the pre-existing weld pass. Thus, a proper tie-in involves correctly merging the two or more weld passes making up the weld along the weld path.

In accordance with an embodiment of the present invention, welding with stainless steel materials is simulated in a real-time virtual environment. The base metal appearance is simulated to provide a realistic representation of a stainless steel weldment. Simulation of the visual effect is provided to change the visual spectrum of light to accommodate the coloration of the arc. Realistic sound is also simulated based on proper work distance, ignition, and speed. The arc puddle appearance and deposition appearance are simulated based on the heat affected zone and the torch movement. Simulation of dross or broken particles of aluminum oxide or aluminum nitride films, which can be scattered throughout the weld bead, is provided. Calculations related to the heating and cooling affected zones are tailored for stainless steel welding. Discontinuity operations related to spatter are provided to more closely and accurately simulate the appearance of stainless steel GMAW welding.

In accordance with an embodiment of the present invention, welding with aluminum materials is simulated in a real-time virtual environment. The bead wake is simulated to closely match the appearance of the aluminum welding to that seen in the real world. The base metal appearance is simulated to represent a realistic representation of an aluminum weldment. Simulation of the visual effect is provided to change the visual spectrum of light to accommodate the coloration of the arc. A calculation of lighting is provided to create reflectivity. Calculations related to the heating and cooling affected zones are tailored for aluminum welding. Simulation of oxidation is provided to create a realistic "cleaning action". Realistic sound is also simulated based on proper work distance, ignition, and speed. The arc puddle appearance and deposition appearance are simulated based on the heat affected zone and the torch movement. The appearance of the aluminum wire is simulated in the GMAW torch to provide a realistic and proper appearance.

In accordance with an embodiment of the present invention, GTAW welding is simulated in a real-time virtual environment. Simulation of operational parameters for GTAW welding are provided including, but not limited to, flow rate, pulsing frequency, pulse width, arc voltage control, AC balance, and output frequency control. Visual representation of the puddle "splash" or dipping technique and melt off of the welding consumable are also simulated. Furthermore, representations of autogenous (no filler metal) and GTAW with filler metal welding operations in the welding puddle are rendered visually and audibly. Implementation of additional filler metal variations may be simulated including, but not limited to, carbon steel, stainless steel, aluminum, and Chrome Moly. A selectable implementation of an external foot pedal may be provided for operation while welding.

### Engine for Modeling

FIGS. 21A-21B illustrate the concept of a welding element (wexel) displacement map 1420, in accordance with an embodiment of the present invention. FIG. 21A shows a side view of a flat welding coupon 1400 having a flat top surface 1410. The welding coupon 1400 exists in the real world as, for example, a plastic part, and also exists in virtual reality space as a simulated welding coupon. FIG. 21B shows a representation of the top surface 1410 of the simulated welding coupon 1400 broken up into a grid or array of welding elements, termed "wexels" forming a wexel map 1420. Each wexel (e.g., wexel 1421) defines a small portion of the surface 1410 of the welding coupon. The wexel map defines the surface resolution. Changeable channel parameter values are assigned to each wexel, allowing values of each wexel to dynamically change in real-time in virtual reality weld space during a simulated welding process. The changeable channel parameter values correspond to the channels Puddle (molten metal fluidity/viscosity displacement), Heat (heat absorption/dissipation), Displacement (solid displacement), and Extra (various extra states, e.g., slag, grain, scorching, virgin metal). These changeable channels are referred to herein as PHED for Puddle, Heat, Extra, and Displacement, respectively.

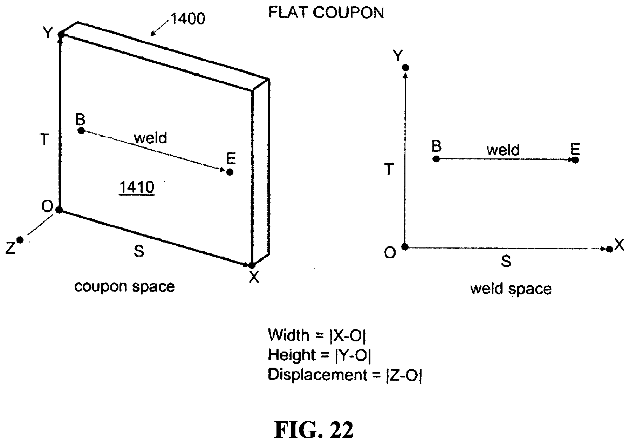

FIG. 22 illustrates an example embodiment of a coupon space and a weld space of the flat welding coupon 1400 of FIG. 21A simulated in the simulator 10 of FIGS. 1 and 2. Points 0, X, Y, and Z define the local 3D coupon space. In general, each coupon type defines the mapping from 3D coupon space to 2D virtual reality weld space. The wexel map 1420 of FIG. 21B is a two-dimensional array of values that map to weld space in virtual reality. A user is to weld from point B to point E as shown in FIG. 22. A trajectory line from point B to point E is shown in both 3D coupon space and 2D weld space in FIG. 22.

Each type of coupon defines the direction of displacement for each location in the wexel map. For the flat welding coupon of FIG. 22, the direction of displacement is the same at all locations in the wexel map (i.e., in the Z-direction). The texture coordinates of the wexel map are shown as S, T (sometimes called U, V) in both 3D coupon space and 2D weld space, in order to clarify the mapping. The wexel map is mapped to and represents the rectangular surface 1410 of the welding coupon 1400.

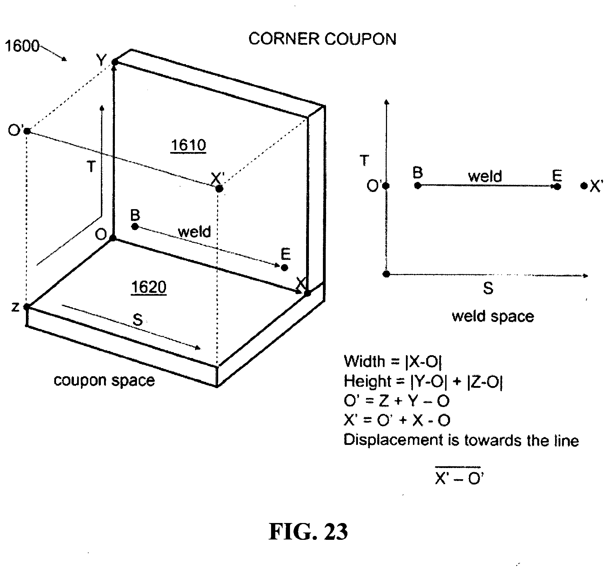

FIG. 23 illustrates an example embodiment of a coupon space and a weld space of a corner welding coupon 1600 simulated in the simulator 10. The corner welding coupon 1600 has two surfaces 1610 and 1620 in 3D coupon space that are mapped to 2D weld space as shown in FIG. 23. Again, points O, X, Y, and Z define the local 3D coupon space. The texture coordinates of the wexel map are shown as S, T in both 3D coupon space and 2D weld space, in order to clarify the mapping. A user is to weld from point B to point E as shown in FIG. 23. A trajectory line from point B to point E is shown in both 3D coupon space and 2D weld space in FIG. 23. However, the direction of displacement is towards the line X'-O' as shown in the 3D coupon space, towards the opposite corner.

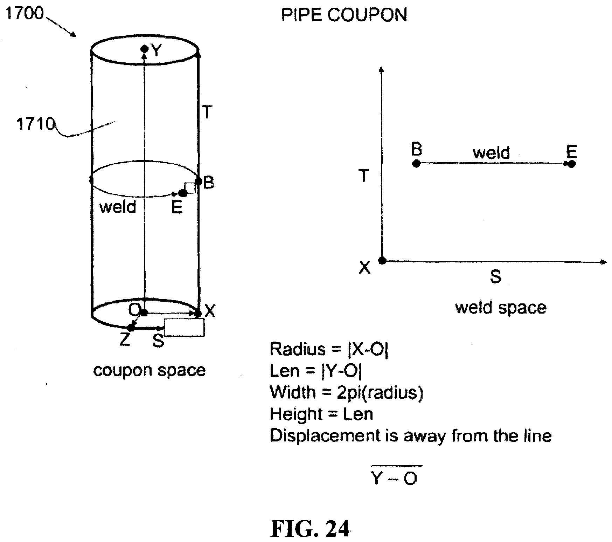

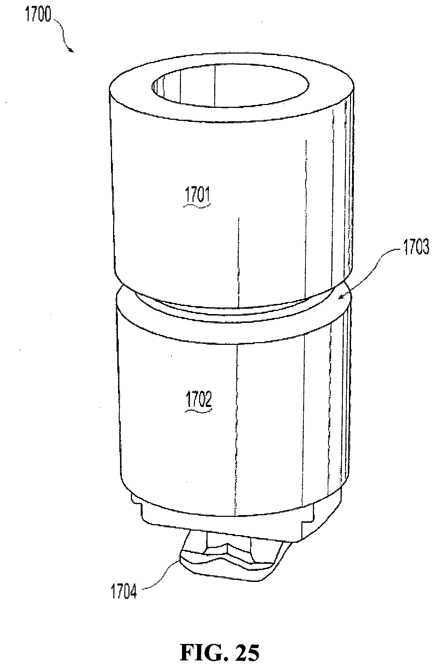

FIG. 24 illustrates an example embodiment of a coupon space and a weld space of a pipe welding coupon 1700 simulated in the simulator 10. The pipe welding coupon 1700 has a curved surface 1710 in 3D coupon space that is mapped to 2D weld space. Points O, X, Y, and Z once again define the local 3D coupon space. The texture coordinates of the wexel map are shown as S, T in both 3D coupon space and 2D weld space, in order to clarify the mapping. An end user 12 is to weld from point B to point E along a curved trajectory as shown in FIG. 24. A trajectory curve and line from point B to point E is shown in 3D coupon space and 2D weld space, respectively. The direction of displacement is away from the line Y-O (i.e., away from the center of the pipe). FIG. 25 illustrates an example embodiment of the pipe welding coupon 1700 of FIG. 24. The pipe welding coupon 1700 is made of a non-ferric, non-conductive plastic and simulates two pipe pieces 1701 and 1702 coming together to form a root joint 1703. An attachment piece 1704 for attaching to the arm 173 of the stand 170 is also shown.

In a similar manner that a texture map may be mapped to a rectangular surface area of a geometry, a weldable wexel map may be mapped to a rectangular surface of a welding coupon. Each element of the weldable map is termed a wexel in the same sense that each element of a picture is termed a pixel (a contraction of picture element). A pixel contains channels of information that define a color (e.g., red, green, blue). A wexel contains channels of information (e.g., P, H, E, D) that define a weldable surface in virtual reality space.

In accordance with an embodiment of the present invention, the format of a wexel is summarized as channels PHED (Puddle, Heat, Extra, Displacement) which contains four floating point numbers. The Extra channel is treated as a set of bits which store logical information about the wexel such as, for example, whether or not there is any slag at the wexel location. The Puddle channel stores a displacement value for any liquefied metal at the wexel location. The Displacement channel stores a displacement value for the solidified metal at the wexel location. The Heat channel stores a value giving the magnitude of heat at the wexel location. In this way, the weldable part of the coupon can show displacement due to a welded bead, a shimmering surface "puddle" due to liquid metal, color due to heat, etc. All of these effects are achieved by the vertex and pixel shaders applied to the weldable surface.

In accordance with an embodiment of the present invention, a displacement map and a particle system are used where the particles can interact with each other and collide with the displacement map. The particles are virtual dynamic fluid particles and provide the liquid behavior of the weld puddle but are not rendered directly (i.e., are not visually seen directly). Instead, only the particle effects on the displacement map are visually seen. Heat input to a wexel affects the movement of nearby particles. There are two types of displacement involved in simulating a welding puddle which include Puddle and Displacement. Puddle displacement is "temporary" and only lasts as long as there are particles and heat present. Displacement is "permanent". Puddle displacement is the liquid metal of the weld which changes rapidly (e.g., shimmers) and can be thought of as being "on top" of the Displacement. The particles overlay a portion of a virtual surface displacement map (i.e., a wexel map). The Displacement represents the permanent solid metal including both the initial base metal and the weld bead that has solidified.

In accordance with an embodiment of the present invention, the simulated welding process in virtual reality space works as follows. Particles stream from the emitter (emitter of the simulated mock welding tool 160) in a thin cone. The particles make first contact with the surface of the simulated welding coupon where the surface is defined by a wexel map. The particles interact with each other and the wexel map and build up in real-time. More heat is added the nearer a wexel is to the emitter. Heat is modeled in dependence on distance from the arc point and the amount of time that heat is input from the arc. Certain visuals (e.g., color) are driven by the heat. A weld puddle is drawn or rendered in virtual reality space for wexels having enough heat. Wherever it is hot enough, the wexel map liquefies, causing the Puddle displacement to "raise up" for those wexel locations. Puddle displacement is determined by sampling the "highest" particles at each wexel location. As the emitter moves on along the weld trajectory, the wexel locations left behind cool. Heat is removed from a wexel location at a particular rate. When a cooling threshold is reached, the wexel map solidifies. As such, the Puddle displacement is gradually converted to Displacement (i.e., a solidified bead). Displacement added is equivalent to Puddle removed such that the overall height does not change. Particle lifetimes are tweaked or adjusted to persist until solidification is complete. Certain particle properties that are modeled in the simulator 10 include attraction/repulsion, velocity (related to heat), dampening (related to heat dissipation), and direction (related to gravity).

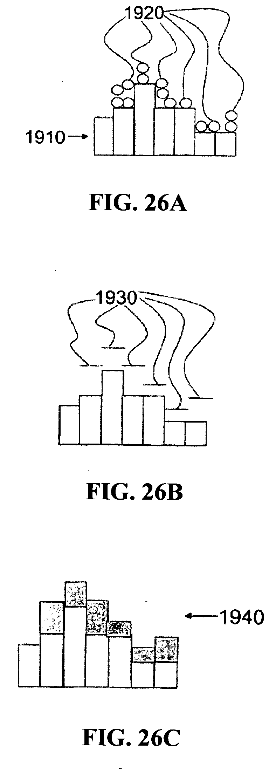

FIGS. 26A-26C illustrate an example embodiment of the concept of a dual-displacement (displacement and particles) puddle model of the simulator 10. Welding coupons are simulated in virtual reality space having at least one surface. The surfaces of the welding coupon are simulated in virtual reality space as a double displacement layer including a solid displacement layer and a puddle displacement layer. The puddle displacement layer is capable of modifying the solid displacement layer.

As described herein, "puddle" is defined by an area of the wexel map where the Puddle value has been raised up by the presence of particles. The sampling process is represented in FIGS. 26A-26C. A section of a wexel map is shown having seven adjacent wexels. The current Displacement values are represented by un-shaded rectangular bars 1910 of a given height (i.e., a given displacement for each wexel). In FIG. 26A, the particles 1920 are shown as round un-shaded dots colliding with the current Displacement levels and are piled up. In FIG. 26B, the "highest" particle heights 1930 are sampled at each wexel location. In FIG. 26C, the shaded rectangles 1940 show how much Puddle has been added on top of the Displacement as a result of the particles. The weld puddle height is not instantly set to the sampled values since Puddle is added at a particular liquification rate based on Heat. Although not shown in FIGS. 26A-26C, it is possible to visualize the solidification process as the Puddle (shaded rectangles) gradually shrink and the Displacement (unshaded rectangles) gradually grow from below to exactly take the place of the Puddle. In this manner, real-time molten metal fluidity characteristics are accurately simulated. As a user practices a particular welding process, the user is able to observe the molten metal fluidity characteristics and the heat dissipation characteristics of the weld puddle in real-time in virtual reality space and use this information to adjust or maintain his welding technique.

The number of wexels representing the surface of a welding coupon is fixed. Furthermore, the puddle particles that are generated by the simulation to model fluidity are temporary, as described herein. Therefore, once an initial puddle is generated in virtual reality space during a simulated welding process using the simulator 10, the number of wexels plus puddle-particles tends to remain relatively constant. This is because the number of wexels that are being processed is fixed and the number of puddle particles that exist and is being processed during the welding process tends to remain relatively constant because puddle particles are being created and "destroyed" at a similar rate (i.e., the puddle particles are temporary). Therefore, the processing load of the logic processor-based subsystem 110 remains relatively constant during a simulated welding session.

In accordance with an alternate embodiment of the present invention, puddle particles may be generated within or below the surface of the welding coupon. In such an embodiment, displacement may be modeled as being positive or negative with respect to the original surface displacement of a virgin (i.e., un-welded) coupon. In this manner, puddle particles may not only build up on the surface of a welding coupon, but may also penetrate the welding coupon. However, the number of wexels is still fixed, and the puddle particles being created and destroyed are still relatively constant.

In accordance with alternate embodiments of the present invention, instead of modeling particles, a wexel displacement map may be provided having more channels to model the fluidity of the puddle. Or, instead of modeling particles, a dense voxel map may be modeled. Or, instead of a wexel map, only particles may be modeled which are sampled and never go away. Such alternative embodiments may not provide a relatively constant processing load for the system, however.

Furthermore, in accordance with an embodiment of the present invention, blowthrough or a keyhole is simulated by taking material away. For example, if a user keeps an arc in the same location for too long, in the real world, the material would bum away causing a hole. Such real-world burnthrough is simulated in the simulator 10 by wexel decimation techniques. If the amount of heat absorbed by a wexel is determined to be too high by the simulator 10, that wexel may be flagged or designated as being burned away and rendered as such (e.g., rendered as a hole). Subsequently, however, wexel reconstitution may occur for certain welding process (e.g., pipe welding) where material is added back after being initially burned away. In general, the simulator 10 simulates wexel decimation (taking material away) and wexel reconstitution (adding material back).

Furthermore, removing material in root-pass welding is properly simulated in the simulator 10. For example, in the real world, grinding of the root pass may be performed prior to subsequent welding passes. Similarly, simulator 10 may simulate a grinding pass that removes material from the virtual weld joint. It will be appreciated that the material removed is modeled as a negative displacement on the wexel map. That is to say that the grinding pass removes material that is modeled by the simulator 10 resulting in an altered bead contour. Simulation of the grinding pass may be automatic, which is to say that the simulator 10 removes a predetermined thickness of material, which may be respective to the surface of the root pass weld bead. In an alternate embodiment, an actual grinding tool, or grinder, may be simulated that turns on and off by activation of the mock welding tool 160 or another input device. It is noted that the grinding tool may be simulated to resemble a real world grinder. In this embodiment, the user maneuvers the grinding tool along the root pass to remove material responsive to the movement thereof. It will be understood that the user may be allowed to remove too much material. In a manner similar to that described above, holes or keyholes, or other defects (described above) may result if the user "grinds away" to much material. Still, hard limits or stops may be implemented, i.e. programmed, to prevent the user from removing to much material or indicate when too much material is being removed.

In addition to the non-visible "puddle" particles described herein, the simulator 10 also uses three other types of visible particles to represent Arc, Flame, and Spark effects, in accordance with an embodiment of the present invention. These types of particles do not interact with other particles of any type but interact only with the displacement map. While these particles do collide with the simulated weld surface, they do not interact with each other. Only Puddle particles interact with each other, in accordance with an embodiment of the present invention. The physics of the Spark particles is setup such that the Spark particles bounce around and are rendered as glowing dots in virtual reality space.

The physics of the Arc particles is setup such that the Arc particles hit the surface of the simulated coupon or weld bead and stay for a while. The Arc particles are rendered as larger dim bluish-white spots in virtual reality space. It takes many such spots superimposed to form any sort of visual image. The end result is a white glowing nimbus with blue edges.

The physics of the Flame particles is modeled to slowly raise upward. The Flame particles are rendered as medium sized dim red-yellow spots. It takes many such spots superimposed to form any sort of visual image. The end result is blobs of orange-red flames with red edges raising upward and fading out. Other types of non-puddle particles may be implemented in the simulator 10, in accordance with other embodiments of the present invention. For example, smoke particles may be modeled and simulated in a similar manner to flame particles.

The final steps in the simulated visualization are handled by the vertex and pixel shaders provided by the shaders 117 of the GPUs 115. The vertex and pixel shaders apply Puddle and Displacement, as well as surface colors and reflectivity altered due to heat, etc. The Extra (E) channel of the PHED wexel format, as discussed earlier herein, contains all of the extra information used per wexel. In accordance with an embodiment of the present invention, the extra information includes a non virgin bit (true=bead, false=virgin steel), a slag bit, an undercut value (amount of undercut at this wexel where zero equals no undercut), a porosity value (amount of porosity at this wexel where zero equals no porosity), and a bead wake value which encodes the time at which the bead solidifies. There are a set of image maps associated with different coupon visuals including virgin steel, slag, bead, and porosity. These image maps are used both for bump mapping and texture mapping. The amount of blending of these image maps is controlled by the various flags and values described herein.

A bead wake effect is achieved using a ID image map and a per wexel bead wake value that encodes the time at which a given bit of bead is solidified. Once a hot puddle wexel location is no longer hot enough to be called "puddle", a time is saved at that location and is called "bead wake". The end result is that the shader code is able to use the 1D texture map to draw the "ripples" that give a bead its unique appearance which portrays the direction in which the bead was laid down. In accordance with an alternative embodiment of the present invention, the simulator 10 is capable of simulating, in virtual reality space, and displaying a weld bead having a real-time weld bead wake characteristic resulting from a real-time fluidity-to-solidification transition of the simulated weld puddle, as the simulated weld puddle is moved along a weld trajectory.

In accordance with an alternative embodiment of the present invention, the simulator 10 is capable of teaching a user how to troubleshoot a welding machine. For example, a troubleshooting mode of the system may train a user to make sure he sets up the system correctly (e.g., correct gas flow rate, correct power cord connected). In accordance with another alternate embodiment of the present invention, the simulator 10 is capable of recording and playing back a welding session (or at least a portion of a welding session, for example, N frames). A track ball may be provided to scroll through frames of video, allowing a user or instructor to critique a welding session. Playback may be provided at selectable speeds as well (e.g., full speed, half speed, quarter speed). In accordance with an embodiment of the present invention, a split-screen playback may be provided, allowing two welding sessions to be viewed side-by-side, for example, on the observer display device 150. For example, a "good" welding session may be viewed next to a "poor" welding session for comparison purposes.

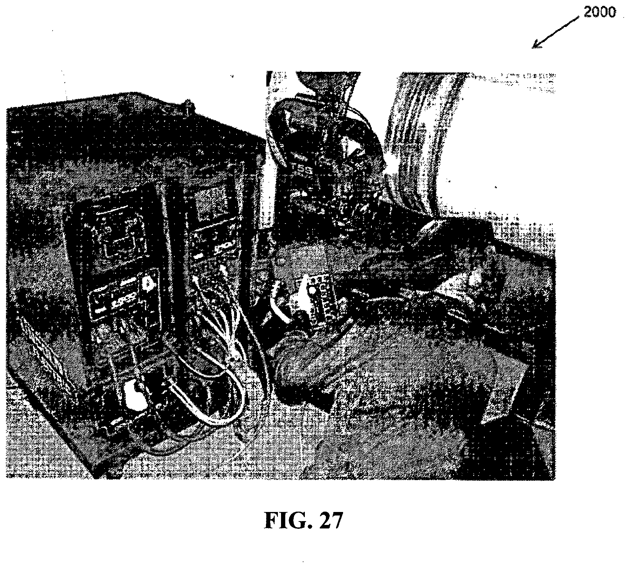

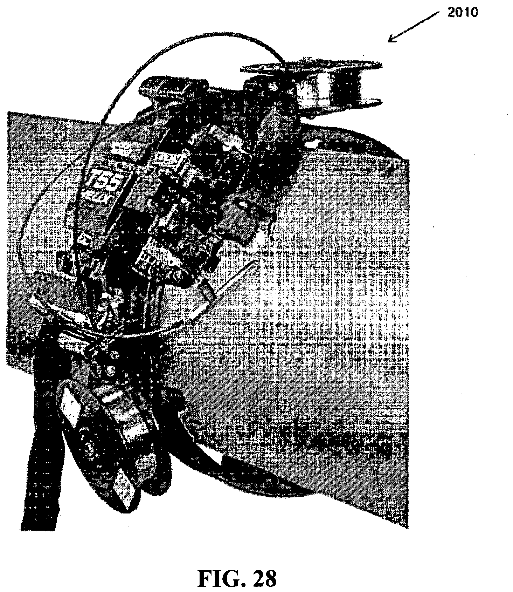

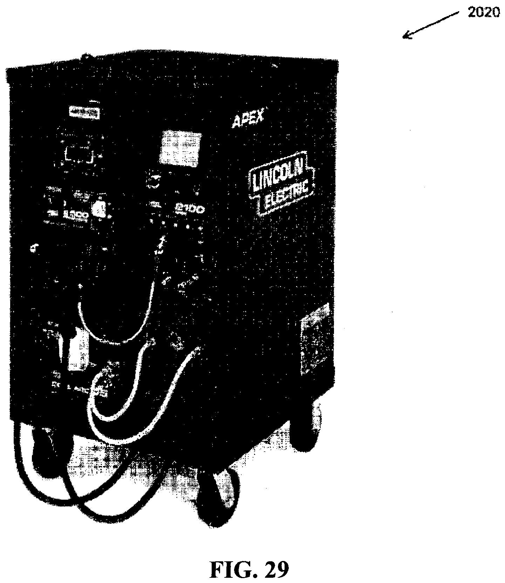

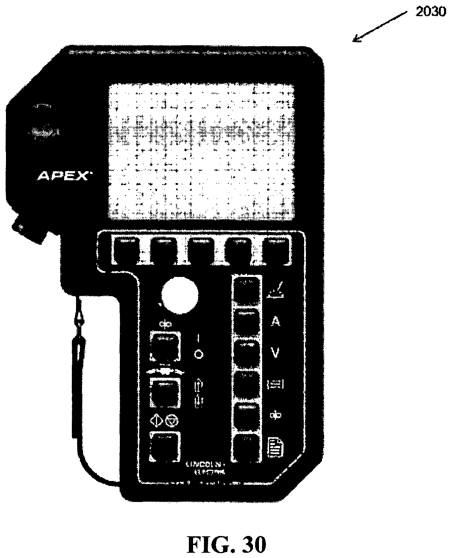

Automated welding is also an aspect of the present invention. One illustrative example of automated welding is orbital welding, which is often used for the joining of tubes or pipes of various types of materials. For example, a TIG (GTAW) welding torch may be used to orbit around the pipes to be welded together by an automated mechanical system. FIG. 27 illustrates an example embodiment of an orbital welding system as used in an orbital welding environment. An orbital welding system includes a welding tractor that travels around the pipes or tubes, a welding power source and controller, and a pendant providing operator control. FIG. 28 shows the welding tractor 2010 of the orbital welding system of FIG. 27, as operably connected to two pipes to be welded. FIG. 29 shows a power source and controller 2020 of the orbital welding system of FIG. 27, and FIG. 30 shows a pendant 2030 of the orbital welding system of FIG. 27.

While the above discussion has focused on the virtual reality simulation of various welding processes, including orbital welding, embodiments of the invention are not limited to that aspect and includes teaching and feedback aspects of the actual setup and performance characteristics associated with welds made in accordance with a user-defined setup. As discussed above, GTAW/GMAW welding requires training to ensure that the operator understands the controls which are available for the practice of a welding process, for example, an orbital welding process. There is a misconception that automation associated with orbital welding systems eliminates the need for training, since the machine is doing the welding. Automated orbital welding requires training to ensure the operator understands welding and all of the unique setup and implementation skills for controlling TIG beads. This includes error correction, larger diameter pipe welding, the utilization of remote cameras, and proper error assessment and correction.

Training programs offer inconsistent or insufficient coverage of teaching a good weld situation, a bad weld situation, and the mechanisms to perform, react to, or correct each. Instructors for this type of niche solution are hard to find with sufficient background and/or industry knowledge and experience. Only through quality training taught by certified instructors can operators of welding equipment gain the complex skills needed to meet the strict acceptance criteria in today's welding environment. Additionally, on large circumference projects with long weld joints (which may include one or more tie-ins), the difficulty of maintaining attention and focus represents a significant problem.

In the GTAW process, an electric arc is maintained between the non-consumable tungsten electrode and the workpiece. The electrode supports the heat of the arc and the metal of the workpiece melts and forms the weld puddle. The molten metal of the workpiece and the electrode must be protected against oxygen in the atmosphere, thereby typically employing an inert gas such as argon as the shielding gas. If the addition of a filler metal is used, the filler wire can be fed to the weld puddle, where it melts due to the energy delivered by the electric arc. In accordance with one embodiment of the invention, a virtual reality welding system is provided that incorporates technology related to viewing a GTAW/GMAW automated welding operation, using a pendant (actual or virtual) or remote control as it relates to automated welding, identifying welding discontinuities based upon chosen welding parameter combinations, and correcting operator selections and combinations of parameters through the use of user screens to understand the interaction of various parameters and their impact on weld quality with proper terminology and visual elements related to automated welding.

By implementing welding (e.g., orbital GTAW) training in a virtual environment, a number of issues may be addressed. For example, industry and experience in the welding process may be based on the knowledge of the development company and therefore is consistent and updated to the latest technology and standards available, which is easily done by software upgrade in a virtual environment. The instructor becomes a facilitator to the program and does not need to be an expert in the welding process. Additional training aids, such as path following cues or visual overlays, improve transfer of training in a virtual environment. Welding equipment, that can become outdated, does not need to be purchased. The virtual reality system can be used in a one-on-one training environment or a classroom type of setting.

The use of a virtual framework allows multiple pendants to be simulated with one training device. In implementing a welding (e.g., orbital GTAW) process in virtual reality, a pendant can be made as a physical device or as a virtual pendant. With the physical device, the student is able to interact with the controls and get the "feel" for the control. With a virtual pendant, where the controls are available and interacted with on a touch screen, the user can easily choose a variety of pendants for control, whether they are customized or company dependant. A virtual pendant also allows for different types of controls or levels to be enabled for use by the student depending on learning levels or controls available based on their industry level (mirroring field work experience). Unlike traditional training, randomized faults (e.g., wire nesting) can be implemented that provide the user a more detailed and complete experience without damage to the equipment or time-consuming setup.

Part of the learning interaction is the understanding of proper welding parameters based on the joint, preparation, material type, etc. In accordance with an embodiment, in virtual reality, theory enabled screens can be enabled to prompt a user with knowledge as to the proper choice to make. Additional screens or tables can be enabled to prompt a user with knowledge of what to input, but can also be enabled when a wrong choice is selected to highlight what was chosen and why it was incorrect, with the proper selections identified. This type of intelligent agent can ensure that the student does not perform incorrectly and become frustrated by the end result, positive reinforcement and learning being the key. An embodiment of the invention will also allow for the system or instructor to quiz user's knowledge and adapt the training curriculum and testing to the individual user's blind spots. An embodiment of the present invention employs artificial intelligence (Al) and a learning management system (LMS) to help with instruction in needed areas, reinforce knowledge, and provide learning assistance.

Setup parameters may include, but are not limited to: inert gas (e.g., Argon, Helium); arc ignition; welding current (e.g., pulsed vs. unpulsed); downslope functionality to avoid crate ring at the end of the weld; torch rotation travel speed; wire feed characteristics (e.g., pulsed waveforms); wire diameter selection; arc voltage; distance between electrode and workpiece; welding oscillation control; remote control; cooling characteristics of the generally integrated closed-loop water cooling circuit; and weld cycle programming (often with four axes), etc.

Inspection and review of the weld is another aspect to the learning process. The student can view the weld and identify what is correct or wrong and, based on these choices, receive a score to identify whether they were right and further receive input on what is right or wrong based on industry standards. This can be enhanced further to identify how to correct these situations. For instance, with the correct amperage and speed (identified), the weld may be a good weld based on a particular industry standard.

As described above, a physical teach pendant or a hand-held control device for input selection in virtual reality welding may be provided. Alternatively, a virtual teach pendant device for control input selection for virtual reality welding may be provided. Interactions with the handheld or virtual device that are student learning level or industry role dependant can be enabled on the device. Restricting controls or interactions based on the user may be provided to enhance learning objectives or reinforce industry role interactions, in accordance with an embodiment.

Teaching interaction or reactions based on visual, audible, or physical changes may be provided to ensure the user knows the proper set-up or error recovery. Also, teaching interaction or reactions based on visual, audible, or physical changes may be provided to ensure the user knows the proper changes in controls needed based on environmental or weld specific changes being made. Virtual calculators or tables may be enabled that allow input and provide an output based on values entered. Intelligent agent enabled results based on incorrect set-up parameters or choices may be provided to reinforce correct industry standards. Furthermore, intelligent agent enabled input to identify what the proper controls input should have been may be provided, based on the current visual, audio, or physical indicators. In accordance with an embodiment, the simulation of camera-based systems may be provided along with the creation of path following and path determinative systems based upon a fuzzy logic controller-based system. For example, multiple renderings may be provided by simulating two camera views such that the camera views may be moved during the simulation. In accordance with an embodiment, an alarm may sound when the desired path is deviated from, based on the fuzzy logic, for example. Visualization of a simulated TIG weld puddle may be provided via pixel sizes that are small enough to provided proper visualization of the TIG weld puddle. Simulation of the magnification of the simulated TIG weld puddle may also be provided, for better visualization by the user.

Multiple levels of experience for the user that adapt to the skill level, learning pace, and learning style of the user (LMS compatible) may be provided. Artificial intelligence (Al) based fault induction may also be provided in order to test the user's ability to detect, correct, and recover from problems. The simulation of unsafe conditions, machine setup, and materials defects may be provided. Also, a multi-language capable system may be provided, allowing for harmonization of training for a global marketplace, in accordance with an embodiment. An embodiment of the present invention may provide a virtual simulation environment allowing two or more users (multi-man) to create a virtual weld, such as in certain orbital welding scenarios.

In summary, disclosed is a real-time virtual reality welding system including a programmable processor-based subsystem, a spatial tracker operatively connected to the programmable processor-based subsystem, at least one mock welding tool capable of being spatially tracked by the spatial tracker, and at least one display device operatively connected to the programmable processor-based subsystem. The system is capable of simulating, in virtual reality space, a weld puddle having real-time molten metal fluidity and heat dissipation characteristics. The system is further capable of displaying the simulated weld puddle on the display device in real-time.

The general inventive concepts also contemplate embodiments wherein the virtual reality welding system is portable in nature, including various containers or cases for transporting the components of such a portable virtual reality welding system.

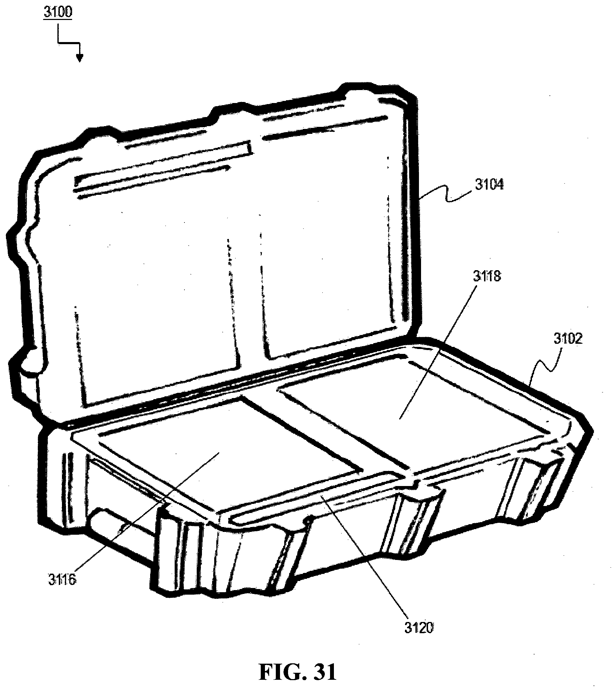

In one embodiment, as shown in FIG. 31, a case 3100, container, or the like is operable to transport a plurality of components of a virtual reality welding system. The case 3100 is designed to protect the components during storage and transport. For example, the case 3100 may protect the components from external forces (e.g., drops). The case 3100 may also protect the components from weather (e.g., rain) and contaminants (e.g., dust).

The case 3100 includes a body 3102 and a lid 3104. The body 3102 and the lid 3104 are formed of rigid materials so as to protect the components within the case 3100. For example, the body 3102 and the lid 3104 may be made of a metal or hard plastic.

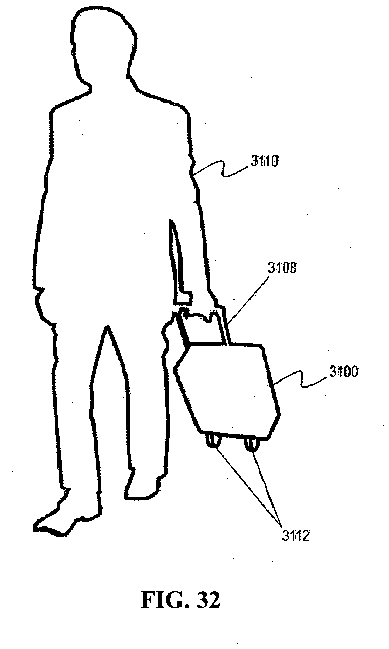

The lid 3104 is hinged or otherwise connected to the body 3102 so that it can move between a closed position (see FIG. 32) and an opened position (*see* FIG. 31). The lid 3104 can be secured to the body 3102 in the closed position by a closing mechanism (not shown). For example, the closing mechanism can include one or more latches or similar structure. The closing mechanism can also include a locking mechanism to prevent unauthorized access to the components within the case 3100.

The case 3100 may also include a handle 3108 to facilitate a user 3110 (e.g., the end user 12) carrying or otherwise transporting the case 3100. In some embodiments, more than one handle is provided on the case. The handle 3108 may be attached to any suitable portion of the case 3100. In one embodiment, the handle 3108 is attached to a top of the lid 3108. In one embodiment, the handle 3108 is attached to a side of the body 3102.

The handle 3108 may be attached to the case 3100 so as to have a fixed size. As another example, the handle 3108 may be attached to the case 3100 in a manner that allows its size to vary. In one embodiment, the handle 3108 can telescope between a fully-extended-length (see FIG. 32) useful for transporting the case 3100 and a fully-retracted length useful for storing the case 3100. The general inventive concepts encompass any other means for facilitating transport of the case 3100. For example, the case 3100 could include a single strap to allow the case 3100 to be carried over the shoulder of the user 3110. As another example, the case 3100 could include a pair of straps to allow the case 3100 be carried on the back of the user 3110. The shoulder strap and/or the back straps could be provided instead of, or in addition to, the handle 3108.

As shown in FIG. 32, the case 3100 may also include a rolling mechanism 3112 (e.g., one or more wheels) to facilitate the user 3110 rolling or otherwise transporting the case 3100.

An interior volume of the case 3100 (i.e., the body 3102 and/or the lid 3104) includes a plurality of compartments for receiving components of the virtual reality welding system. The compartments are sized and/or shaped to securely retain the corresponding components therein. In one embodiment, the compartments are surrounded by and/or separated by a shock-absorbing material (e.g., foam).

In one embodiment, the interior volume of the case 3100 includes a plurality of tiers or layers of foam, wherein each layer of foam can store or otherwise enclose at least one component of the virtual reality welding system. For example, removal of a first layer of foam (and its components) provides access to a second layer of foam (and its components) located below the first layer of foam within the case 3100.

In one embodiment, the case 3100 includes a first compartment 3116, a second compartment 3118, and a third compartment 3120. According to the general inventive concepts, the case 3100 can include more or fewer compartments.

The first compartment 3116 is operable to receive or otherwise house a control unit 3130 of the virtual reality welding system. The control unit 3130 includes the processing logic and circuitry (e.g., hardware and/or software) for implementing the virtual reality welding simulation. For example, the control unit 3130 can include a CPU, a GPU, a motion tracker (e.g., the spatial tracker 120), etc.

In one embodiment, the spatial tracker is an external or stand-alone motion tracking device, such as a unit that generates a magnetic field and is operable to detect or otherwise determine the location of one or more sensors within the magnetic field. The spatial tracker can interface with the control unit 3130, such as via a cable (e.g., a USB cable) or wireless communication. In this example, the control unit 3130 could be a general purpose computer running software to implement the virtual reality welding simulation. In another embodiment, the spatial tracker can be integrated within a housing of the control unit 3130. In another embodiment, the spatial tracker can be integrated with another component, such as the display unit 3140 described below.

In accordance with other embodiments, other types of spatial trackers may be used in the virtual reality welding system including, for example, an accelerometer/gyroscope-based tracker, an optical tracker (active or passive), an infrared tracker, an acoustic tracker, a laser tracker, a radio frequency tracker, an inertial tracker, and augmented reality-based tracking systems. Other types of trackers may be possible as well. In some embodiments, a combination of two or more different tracking technologies can be employed.

The second compartment 3118 is operable to receive or otherwise house a display unit 3140 (e.g., an LCD monitor) of the virtual reality welding system. The display unit 3140 may include a stand. The stand may allow a viewing height and/or angle of the display unit 3140 to be adjusted. The stand may be removable to allow for mounting or other positioning of the display unit 3140 relative to a support surface on which the display unit 3140 rests.

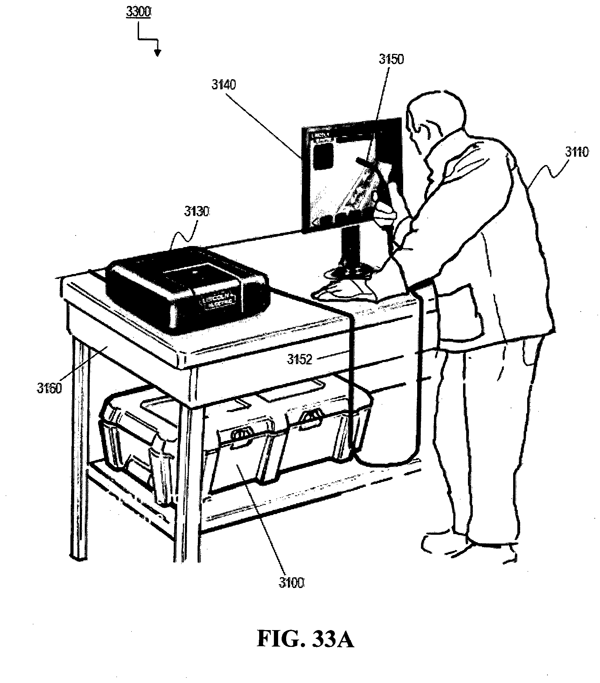

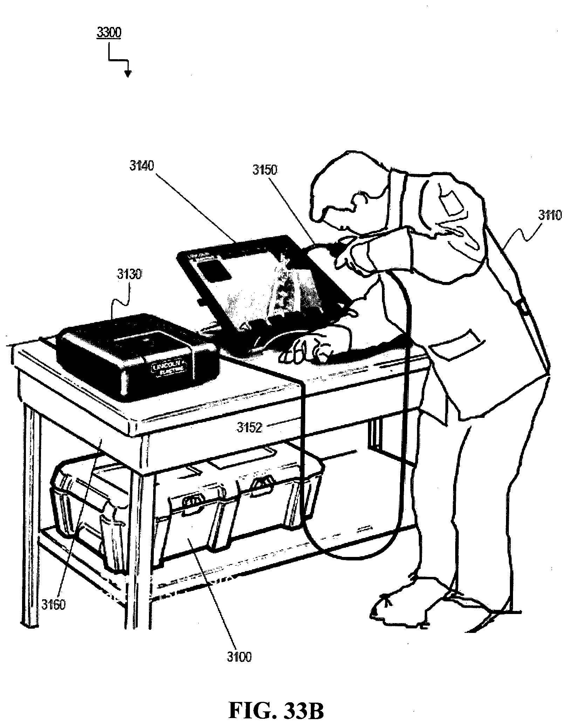

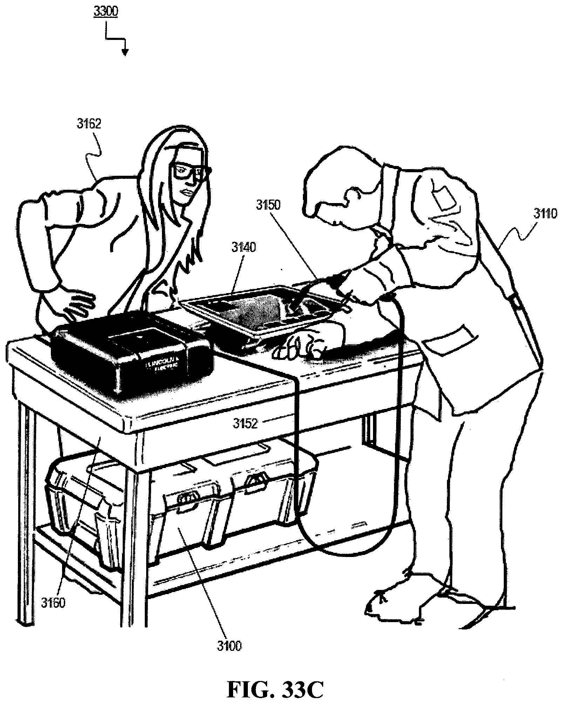

In one embodiment, the display unit 3140 is adjustable from an upright position to a flat position. In the upright position, the display unit 3140 forms an angle with the support surface on which the display unit 3140 rests of approximately 90 degrees (see FIG. 33A). In the flat position, the display unit 3140 forms an angle with the support surface on which the display unit 3140 rests of approximately 0 degrees (see FIG. 33C). In one embodiment, the display unit 3140 is adjustable to a tilted position between the upright position and the flat position. In the tilted position, the display unit 3140 forms an angle with the support surface on which the display unit 3140 rests between 0 and 90 degrees (see FIG. 33B).

The third compartment 3120 is operable to receive or otherwise house a mock welding tool 3150 (e.g., the mock welding tool 160). In one embodiment, the mock welding tool 160 approximates the look and feel of a MIG torch (see FIGS. 33A-33C). The mock welding tool 3150 interfaces with the control unit 3130, such as via a cable (e.g., a USB cable 3152) or wireless communication.

The general inventive concepts contemplate that one or more of the components of the virtual reality welding system could be integrated or otherwise combined. For example, the control unit 3130 and the display unit 3140 could be contained within a unitary housing. In one embodiment, a laptop computer embodies the control unit 3130 and the display unit 3140. In one embodiment, a portable device such as a mobile phone or tablet embodies the control unit 3130 and the display unit 3140.

As shown in FIGS. 33A-33C, an installation 3300 of the virtual reality welding system is accomplished by removing the components (e.g., the control unit 3130, the display unit 3140, the mock welding tool 3150) from the case 3100 and setting up the system on a support surface. In one embodiment, the support surface is the top of a work bench 3160, desk, table, or the like. The empty case 3100 may be stored, for example, in a lower section of the work bench 3160. In one embodiment, the empty case 3100 could be used instead of or in addition to the support surface for one or more components of the virtual reality welding system. In one embodiment, a lid of the housing (e.g., the case 3100) can separate from the housing such that the lid and/or the housing can be used as the support surface.

Once set up, the user 3110 can interact with the virtual reality welding system to simulate a welding exercise. For example, an input device can be used by the user 3110 to select a particular welding process for simulating, to specify welding parameters, to select a (virtual) welding coupon, etc. In one embodiment, the motion tracker is the input device, wherein the motion tracker interprets certain movements by the user 3110 as input. In another embodiment, the display unit 3140 is a touch screen monitor that serves as the input device, wherein the user 3110 can interact with the touch screen monitor using, for example, the mock welding tool 3150, a stylus, or a finger.

In FIG. 33A, the user 3110 (e.g., a trainee user 12a) performs a virtual welding operation on the display unit 3140 in the upright position. In FIG. 33B, the user 3110 (e.g., a trainee user 12a) performs a virtual welding operation on the display unit 3140 in a tilted position. In FIG. 33C, the user 3110 (e.g., a trainee user 12a) performs a virtual welding operation on the display unit 3140 in the flat position. Because the display unit 3140 is in the flat position, at least one second user 3162 (e.g., an instructor user 12b) can readily observe the user 3110 performing the welding operation. Of course, other configurations and positions of the display unit 3140 may be suitable for one or more users (e.g., the instructor user 12b) to observe the user 3110 performing the welding operation.

Once the simulations are completed, the components of the virtual reality welding system can be separated and returned to the case 3100 for subsequent storage and/or transport.

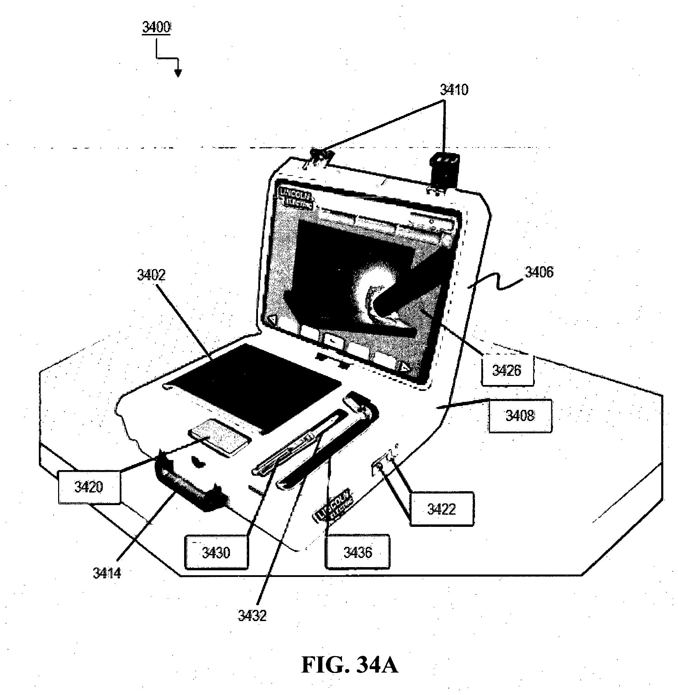

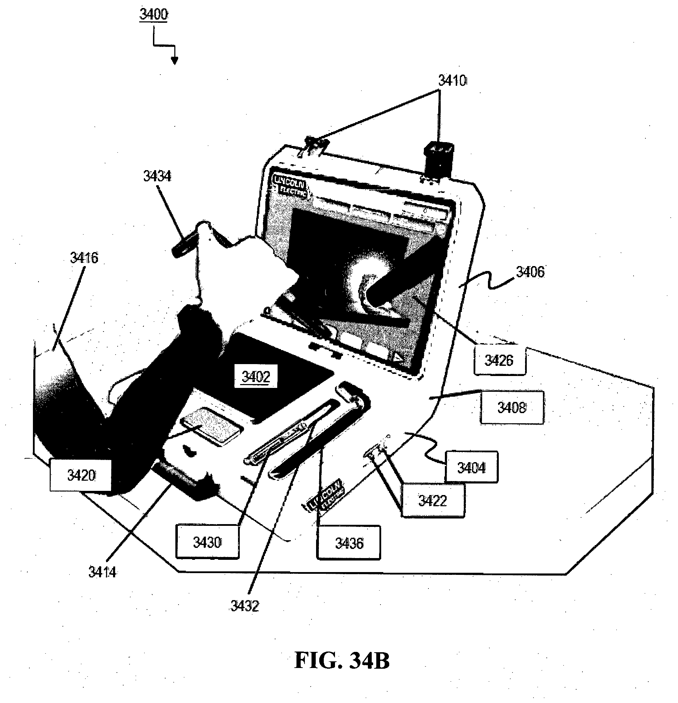

In another embodiment, as shown in FIGS. 34A-34B, a case 3400, container, or the like is integrated with at least one component of a virtual reality welding system. The case 3400 can also include one or more compartments 3402, such as described above, for non-integrated components of the virtual reality welding system.

The case 3400 is designed to protect the components, whether integrated or not, during storage and transport. For example, the case 3400 may protect the components from external forces (e.g., drops). The case 3400 may also protect the components from weather (e.g., rain) and contaminants (e.g., dust).

The case 3400 includes a body 3404 and a lid 3406. The body 3404 and the lid 3406 are formed of rigid materials so as to protect the components within the case 3100. For example, the body 3404 and the lid 3406 may be made of a metal or hard plastic.

The lid 3406 is connected to the body 3404 by a hinge 3408 or similar structure so that it can move between a closed position and an opened position. The lid 3406 can be secured to the body 3404 in the closed position by a closing mechanism. For example, the closing mechanism can include one or more latches 3410 or similar structure. The closing mechanism can also include a locking mechanism to prevent unauthorized access to the components within the case 3400.

The case 3400 may also include a handle 3414 to facilitate a user 3416 (e.g., the end user 12) carrying or otherwise transporting the case 3400. The handle 3414 may be attached to any suitable portion of the case 3400. In one embodiment, the handle 3414 is attached to a top of the lid 3406. In one embodiment, the handle 3414 is attached to a side of the body 3404.

The handle 3414 may be attached to the case 3400 so as to have a fixed size. As another example, the handle 3414 may be attached to the case 3400 in a manner that allows its size to vary. In one embodiment, the handle 3414 can telescope between a fully-extended-length useful for transporting the case 3400 and a fully-retracted length useful for storing the case 3400. The general inventive concepts encompass any other means for facilitating transport of the case 3400. For example, the case 3400 could include a single strap to allow the case 3400 to be carried over the shoulder of the user 3416. As another example, the case 3400 could include a pair of straps to allow the case 3400 be carried on the back of the user 3416. The shoulder strap and/or the back straps could be provided instead of, or in addition to, the handle 3414.

The case 3400 may also include a rolling mechanism (not shown), such as one or more wheels, to facilitate the user 3416 rolling or otherwise transporting the case 3400.

As noted above, an interior volume of the case 3400 (i.e., the body 3404 and/or the lid 3406) includes one or more compartments 3402 for receiving non-integrated components of the virtual reality welding system. The compartments 3402 are sized and/or shaped to securely retain the corresponding components therein. In one embodiment, the compartments 3402 are surrounded by and/or separated by a shock-absorbing material (e.g., foam).

The case 3400 is integrated with a control unit of the virtual reality welding system. The control unit includes the processing logic and circuitry (e.g., hardware and/or software) for implementing the virtual reality welding simulation. For example, the control unit can include a CPU, a GPU, a motion tracker 3420 (e.g., the spatial tracker 120), etc.

In one embodiment, the motion tracker 3420 is an external or stand-alone motion tracking device, such as a unit that generates a magnetic field and is operable to detect or otherwise determine the location of one or more sensors within the magnetic field. The motion tracker 3420 can interface with the control unit, such as via a cable (e.g., a USB cable) or wireless communication. In this example, the control unit could be a general purpose computer running software to implement the virtual reality welding simulation. In another embodiment, the motion tracker 3420 can be integrated within a housing of the control unit. In another embodiment, the motion tracker 3420 can be integrated with another component, such as the display unit 3426 described below.

In accordance with other embodiments, other types of motion trackers may be used in the virtual reality welding system including, for example, an accelerometer/gyroscope-based tracker, an optical tracker (active or passive), an infrared tracker, an acoustic tracker, a laser tracker, a radio frequency tracker, an inertial tracker, and augmented reality-based tracking systems. Other types of trackers may be possible as well. In some embodiments, a combination of two or more different tracking technologies can be employed.

The case 3400 may also include one or more connecting ports 3422. For example, a connecting port 3422 allows the case to interface with an external power source (e.g., electrical outlet). In one embodiment, the case 3400 houses an internal power supply. As another example, a connecting port 3422 is a USB connector that allows the case 3400 (e.g., the control unit) to interface with one or more external devices (e.g., a welding stinger, a welding torch, a cutting device) to facilitate the virtual welding/cutting activity.

The case 3400 is also integrated with a display unit 3426 (e.g., an LCD screen) of the virtual reality welding system. For example, the display unit 3426 can be integrated into the lid 3406 of the case 3400. In this case, a viewing angle of the display unit 3426 is readily adjustable by pivoting the lid 3406 relative to the body 3404 of the case 3400.

As noted above, the case 3400 can also include non-integrated components of the virtual reality welding system. For example, the case 3400 can house one or more mock welding tools (e.g., the mock welding tool 160) in corresponding compartments. In one embodiment, the case 3400 includes a mock welding stick 3430 and corresponding compartment 3432, as well as a mock MIG torch 3434 and corresponding compartment 3436. The mock welding tools can interface with the control unit in any suitable manner. For example, the mock welding tools can be connected to the control unit via a wired connection (e.g., a USB cable plugged into a connector 3422) or a wireless connection. As another example, the motion tracker 3420 can capture movement of the mock welding tools and translate that movement into information provided to the control unit.

The case 3400 allows for simple and secure storing and transporting of the virtual reality welding system. The virtual reality welding system embodied by the case 3400 and its contents can be readily setup or otherwise installed on any suitable work surface (e.g., a work bench, desk, table) for use thereof in simulating a welding/cutting exercise. Once the simulations are completed, the non-integrated components of the virtual reality welding system can be returned to the case 3400 for subsequent storage and/or transport.

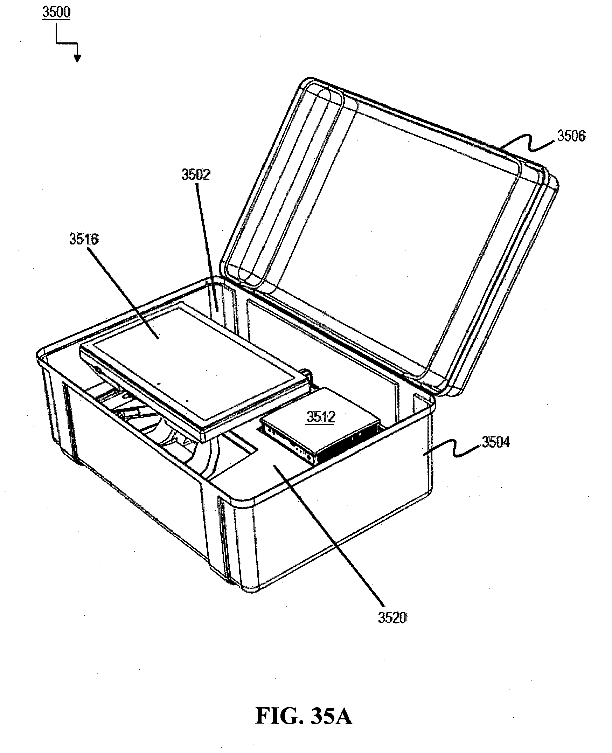

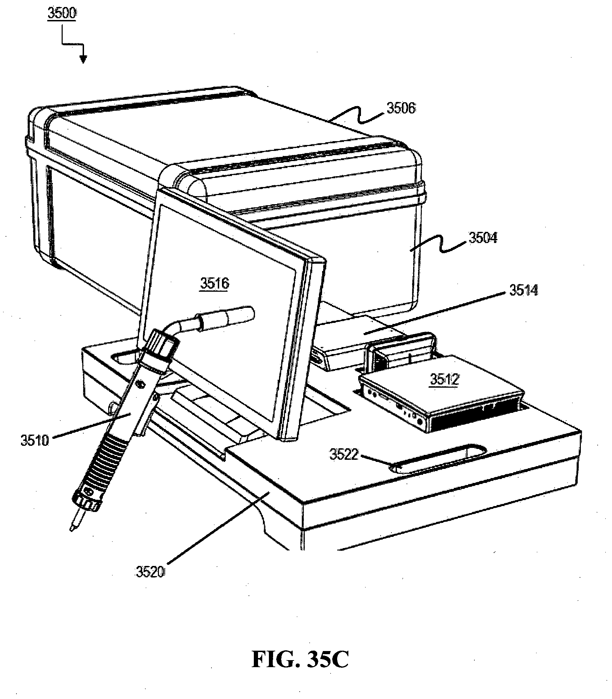

In another embodiment, as shown in FIGS. 35A-35C, a case 3500, container, or the like has an inner volume that defines a cavity 3502 (e.g., one or more compartments) for securely housing components of the virtual reality welding system. The components can include, for example, a mock welding tool 3510, a control unit 3512, a motion tracker 3514, a display unit 3516 (e.g., an LCD screen), etc. of the virtual reality welding system.

The case 3500 is designed to protect the components in the cavity 3502 during storage and transport. For example, the case 3500 may protect the components from external forces (e.g., drops). The case 3500 may also protect the components from weather (e.g., rain) and contaminants (e.g., dust).

The case 3500 includes a body 3504 and a lid 3506. In one embodiment, the body 3504 and the lid 3506 are formed of rigid materials so as to protect the components within the case 3500. For example, the body 3504 and the lid 3506 may be made of a metal or hard plastic.

In one embodiment, the lid 3506 is connected to the body 3504 by a hinge or similar structure so that it can move between a closed position and an opened position. In one embodiment, the lid 3506 fits (e.g., friction fits) into or around the body 3504 so that it can move between an attached (i.e., closed) position and a removed (i.e., opened) position.

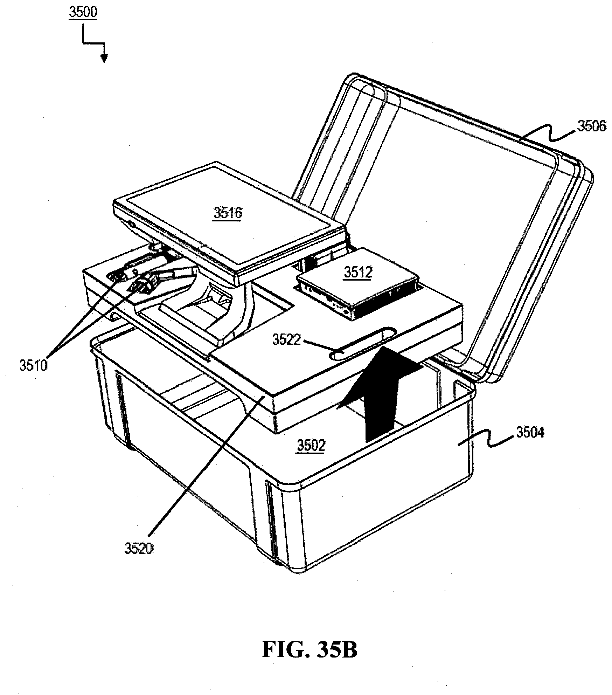

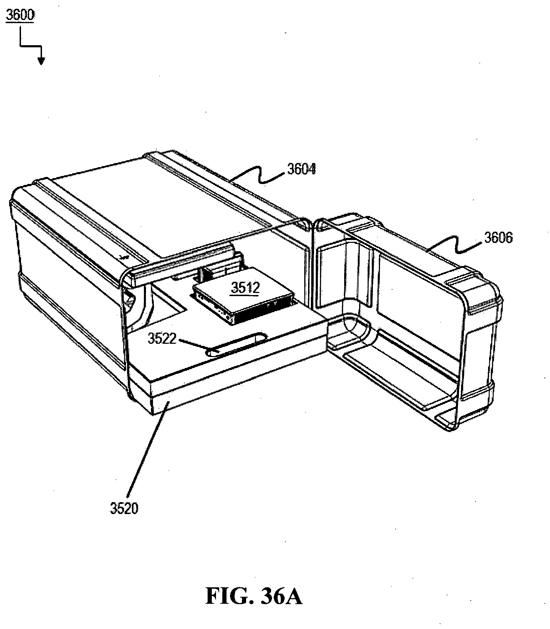

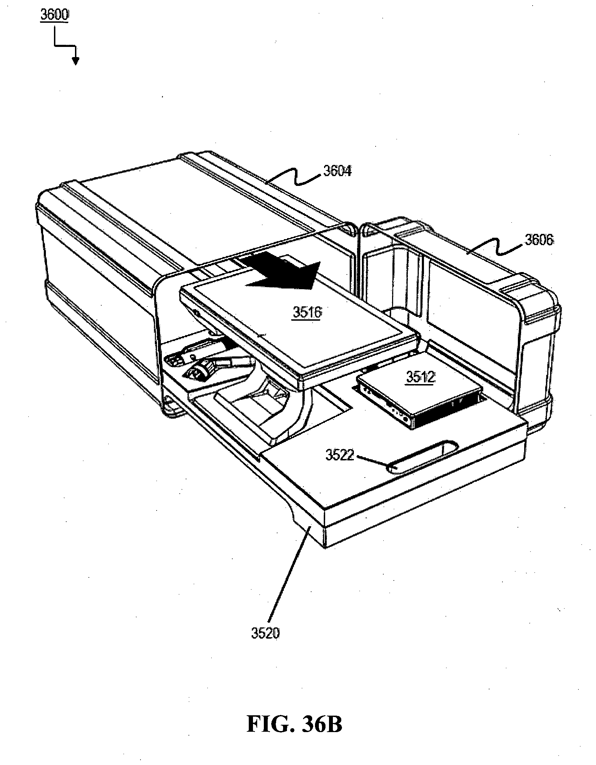

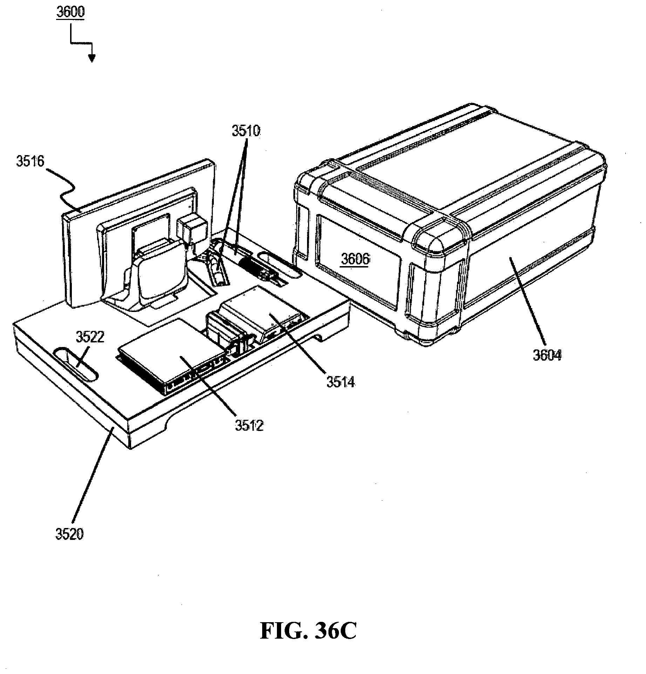

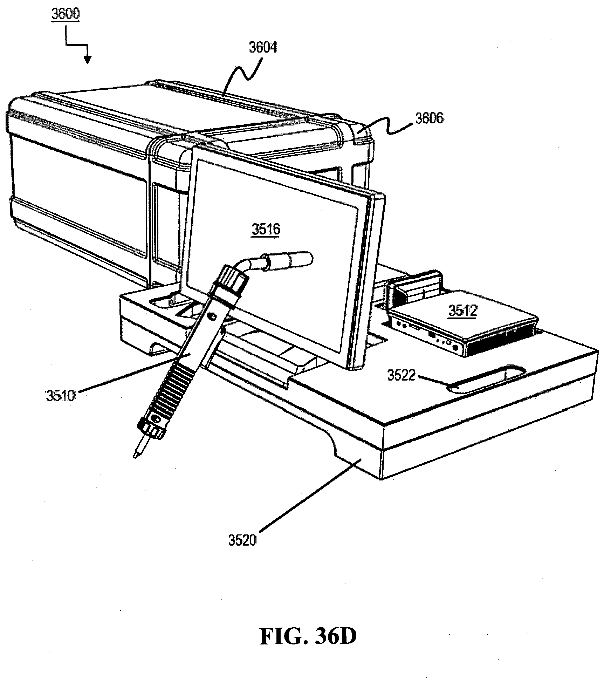

As shown in FIGS 35A-35C, the lid 3506 defines an upper portion and surface of the case 3500. In another embodiment, as shown in FIGS. 36A-36D, a lid 3606 (along with a body 3604) defines a side portion and surface of a case 3600. Thus, a primary difference between the cases 3500 and 3600 is the manner (e.g., direction) by which the components are inserted into and removed from the respective cases, for example, as shown by the arrows in FIGS. 35B and 36B.

The lid 3506 can be secured to the body 3504 in the closed position by one or more closing mechanisms. For example, the closing mechanisms can include one or more latches or similar structure. The closing mechanism can also include a locking mechanism to prevent unauthorized access to the components within the case 3500.

The case 3500 may also include a handle (not shown) to facilitate a user (e.g., the end user 12) carrying or otherwise transporting the case 3500. The handle may be attached to any suitable portion of the case 3500. In one embodiment, the handle is attached to a top of the lid 3506. In one embodiment, the handle is attached to a side of the body 3504.

The handle may be attached to the case 3500 so as to have a fixed size. As another example, the handle may be attached to the case 3500 in a manner that allows its size to vary. In one embodiment, the handle can telescope between a fully-extended-length useful for transporting the case 3500 and a fully-retracted length useful for storing the case 3500. The general inventive concepts encompass any other means for facilitating transport of the case 3500. For example, the case 3500 could include a single strap to allow the case 3500 to be carried over the shoulder of the user. As another example, the case 3500 could include a pair of straps to allow the case 3500 be carried on the back of the user. The shoulder strap and/or the back straps could be provided instead of, or in addition to, the handle.

The case 3500 may also include a rolling mechanism (not shown), such as one or more wheels, to facilitate the user rolling or otherwise transporting the case 3500.

A plurality of the components of the virtual reality welding system may be situated in or otherwise interfaced with a tray 3520 or similar structure, such that the components can be removed from (and inserted into) the case 3500 as a single unit (i.e., at the same time). In one embodiment, the tray 3520 includes some structure 3522, such as a recess, handle, flange, textured surface, etc., that facilitates removing the tray 3520 from the case 3500.

The tray 3520 may be made of any suitable material. In one embodiment, the tray 3520 is made of a rigid material (e.g., metal or hard plastic). In one embodiment, the tray 3520 is made of a shock-absorbing material (e.g., foam). In one embodiment, the tray 3520 includes a portion made of a rigid material and a portion made of a non-rigid material.

The tray 3520 can include one or more compartments, cut-outs, or the like for receiving corresponding components of the virtual reality welding system. For example, as shown in FIG. 35B, the tray 3520 includes a compartment that holds the mock welding tool 3510 (shown broken down into two pieces). Other compartments can hold one or more other components (e.g., welding coupons). The compartments are sized and/or shaped to securely retain the corresponding components therein, while also allowing the user to readily remove the components therefrom when needed. In one embodiment, the compartments are surrounded by and/or separated by a shock-absorbing material (e.g., foam).

In one embodiment, one or more of the components (e.g., the display unit 3516) is integrated in or otherwise affixed to the tray 3520.

In one embodiment, the tray 3520 is integrated with a control unit 3512 of the virtual reality welding system. The control unit 3512 includes the processing logic and circuitry (e.g., hardware and/or software) for implementing the virtual reality welding simulation. For example, the control unit 3512 can include a CPU, a GPU, a memory, etc.

In one embodiment, the tray 3520 is integrated with the motion tracker 3514 of the virtual reality welding system. The motion tracker 3514 is an external motion tracking device, such as a unit that generates a magnetic field and is operable to detect or otherwise determine the location of one or more sensors within the magnetic field. The motion tracker 3514 can interface with the control unit, such as via a cable (e.g., a USB cable) or wireless communication. In this example, the control unit could be a general purpose computer running software to implement the virtual reality welding simulation. In another embodiment, the motion tracker 3514 can be integrated within the control unit 3512. In another embodiment, the motion tracker 3514 can be integrated within the display unit 3516.

In accordance with other embodiments, other types of motion trackers may be used in the virtual reality welding system including, for example, an accelerometer/gyroscope-based tracker, an optical tracker (active or passive), an infrared tracker, an acoustic tracker, a laser tracker, a radio frequency tracker, an inertial tracker, and augmented reality-based tracking systems. Other types of trackers may be possible as well. In some embodiments, a combination of two or more different tracking technologies can be employed.

In one embodiment, the tray 3520 is integrated with the display unit 3516 of the virtual reality welding system. In this case, a viewing angle of the display unit 3516 is readily adjustable by pivoting the display unit 3516 relative to the tray 3520.

The case 3500 and/or tray 3520 may also include one or more connecting ports. For example, a connecting port allows the case to interface with an external power source (e.g., electrical outlet). In one embodiment, the case 3500 houses an internal power supply. As another example, a connecting port is a USB connector that allows the case 3500 (e.g., the control unit 3512) to interface with one or more external devices (e.g., a welding stinger, a welding torch, a cutting device) to facilitate the virtual welding/cutting activity.

In one embodiment, the tray 3520 can act as a support surface for one or more of the components the virtual reality welding system.

As noted above, the tray 3520 can also include non-integrated components of the virtual reality welding system. For example, the tray 3520 can hold one or more mock welding tools (e.g., the mock welding tool 3510), welding coupons, etc. in corresponding compartments, sections, or the like.

In one embodiment, a plurality of trays fit within the cavity 3502 of the case 3500, wherein each of the trays is associated with one or more of the components of the virtual reality welding system.

The case 3500 allows for simple and secure storing and transporting of the virtual reality welding system. The virtual reality welding system embodied by the case 3500 and its contents can be readily setup or otherwise installed on any suitable work surface (e.g., a work bench, desk, table) for use thereof in simulating a welding/cutting exercise. Once the simulations are completed, the tray 3520 and the components of the virtual reality welding system can be returned to the case 3500 for subsequent storage and/or transport.

The invention has been described herein with reference to the disclosed embodiments. Obviously, modifications and alterations will occur to others upon a reading and understanding of this specification. It is intended to include all such modifications and alterations insofar as they come within the scope of the appended claims or the equivalence thereof.

**Reference Numbers**

| | | | |
|---|---|---|---|
| 10 | simulator or system | 135 | console |
| 12 | end user | 136 | dial or knob |
| 12a | trainee user | 137 | dial or knob |
| 12b | instructor user | 140 | display |
| 15 | virtual environment | 150 | display |
| 110 | logic processor-based subsystem | 151 | various welding parameters |
| 111 | CPU | 152 | discontinuity states |
| 115 | GPU | 153 | user selections |
| 116 | CUDA | 155 | input device |
| 117 | shader | 156 | manual welding electrode holder |
| 118 | output | 160 | mock welding tool |
| 119 | output | 161 | holder |
| 120 | spatial tracker | 162 | simulated stick electrode |
| 121 | magnetic source | 163 | tactilely resistive tip |
| 122 | sensor | 170 | coupon stand |
| 123 | disk | 171 | adjustable table |
| 124 | power source | 172 | stand base |
| 125 | USB and RS-232 cables | 173 | adjustable arm |
| 126 | processor tracking unit | 174 | vertical post |
| 130 | welding user interface | 175 | welding coupon |
| 131 | buttons | 176 | welding joint |
| 132 | joystick | 177 | connection portion or connector |
| 133 | knobs, dials and/or switches | 179 | predefined points |
| 134 | knobs, dials and/or switches | 200 | displaying device |
| 203 | logic processor-based system | 1222 | special effects |
| 204 | microprocessor | 1300 | method |
| 300 | data storage devices | 1310 | step |
| 900 | welding helmet | 1320 | step |
| 910 | speakers | 1330 | step |
| 1201 | physical interface | 1340 | step |
| 1202 | torch and clamp models | 1350 | step |
| 1203 | environment models | 1400 | welding coupon |
| 1204 | sound content functionality | 1410 | Flat top surface |
| 1205 | welding sounds | 1420 | welding element (wexel) displacement map |
| 1206 | stand/table model | 1421 | wexel |
| 1207 | architecture functionality | 1600 | corner welding coupon |
| 1208 | calibration functionality | 1610 | surface |
| 1210 | coupon models | 1620 | surface |
| 1211 | welding physics | 1700 | pipe welding coupon |
| 1212 | adjustment tool | 1701 | pipe piece |
| 1213 | graphical user interface functionality | 1702 | pipe piece |
| 1214 | graphing functionality | 1703 | root joint |
| 1215 | student reports functionality | 1704 | attachment piece |
| 1216 | renderer | 1910 | un-shaded rectangular bars |
| 1217 | bead rendering | 1920 | particles |
| 1218 | textures | 1930 | particle heights |
| 1219 | functionality | 1940 | shaded rectangles |
| 1220 | scoring and tolerance functionality | 2000 | pipe |
| 1221 | tolerance editor | 2002 | plate |
| 2004 | weld path | 3152 | USB cable |
| 2010 | welding tool | 3160 | work bench |
| 2020 | lower section | 3162 | second user |
| 2030 | pendant | 3300 | installation |
| 2100 | image | 3400 | case |
| 2300 | tie-in operation | 3402 | more compartments |
| 2302 | first point | 3404 | body |
| 2304 | arrow | 3406 | lid |
| 2306 | second point | 3408 | hinge |
| 2308 | first weld pass | 3414 | handle |
| 2320 | third point | 3416 | user |
| 2322 | arrow | 3420 | motion tracker |
| 2324 | fourth point | 3422 | connecting ports |
| 2326 | second weld pass | 3426 | display unit |
| 3100 | case | 3430 | mock welding stick |
| 3102 | body | 3434 | mock MIG torch |
| 3104 | lid | 3436 | corresponding compartment |
| 3108 | handle | 3500 | case |
| 3110 | user | 3502 | cavity |
| 3116 | first compartment | 3504 | body |
| 3118 | second compartment | 3506 | lid |
| 3120 | third compartment | 3510 | mock welding tool |
| 3130 | control unit | 3512 | control unit |
| 3140 | display unit | 3514 | motion tracker |
| 3150 | mock welding tool | 3516 | display unit |
| 3520 | tray | 3606 | lid |
| 3522 | structure | | |
| 3600 | case | | |

## Claims

1. A portable virtual welding system for facilitating a virtual welding activity, comprising by:
a control unit (3130) comprising a logic processor-based subsystem operable to execute coded instructions for generating an interactive welding environment that emulates a welding activity;
a display unit (3140) operatively connected to the control unit (3130) for visually depicting the interactive welding environment;
a hand-held input device (3150) for performing the virtual welding activity; and
a case (3100) for removably housing at least one of the control unit (3130), the display unit (3140), and the hand-held input device (3150), during storage or transport of the virtual welding system, wherein the hand-held input device (3150) is not integrated with the case (3100) but removably housed within the case (3100) for returning it after virtual welding activity;
wherein the case (3100) is for storing and transporting the virtual welding system,
**characterized in that**
at least one of the control unit (3130) and the display unit (3140) are integrated with the case to remain in the case during virtual welding activity.

2. The system as defined in claim 1, wherein the case (3150) is operable for use as a support surface for at least one of the control (3130) unit and display unit (3140), during operation of the virtual welding system.

3. The system as defined in claim 1 or 2, wherein the control unit (3130) further comprises a motion tracker (3514) for detecting a spatial position of the input device (3150).

4. The system as defined in claim 3, wherein the motion tracker (3514) is integrated with the case (3100).

5. The system as defined in one of the claims 1 to 4, wherein the control unit (3130) and the display unit (3140) are integrated with the case (3100).

6. The system as defined in one of the claims 1 to 5, wherein the display unit (3140) further comprises at least one speaker for outputting audio.

7. The system as defined in one of the claims 1 to 6, wherein the input device (3150) is sized and shaped to simulate a welding torch.

8. The system as defined in one of the claims 1 to 7, wherein the case (3100) houses an internal power source.

9. The system as defined in one of the claims 1 to 8, wherein the power source is at least one battery.

10. The system as defined in one of the claims 1 to 9, wherein the case (3100) comprises a carrying handle (3108).

11. The system as defined in one of the claims 1 to 10, wherein the case (3100) comprises at least one carrying strap.

12. The system as defined in on of the claims 1 to 11, wherein the case (3100) comprises a pair of wheels (3112).

## Patentansprüche

1. Portables virtuelles Schweißsystem zum Ermöglichen einer virtuellen Schweißaktivität, das Folgendes umfasst:
eine Steuereinheit (3130), die ein logikprozessorgestütztes Teilsystem umfasst, das dafür ausgelegt ist, codierte Anweisungen zum Erzeugen einer interaktiven Schweißumgebung, die eine Schweißaktivität emuliert, auszuführen;
eine Anzeigeeinheit (3140), die mit der Steuereinheit (3130) wirkverbunden ist, um die interaktive Schweißumgebung visuell darzustellen;
eine handgehaltene Eingabevorrichtung (3150) zum Ausführen der virtuellen Schweißaktivität; und
ein Gehäuse (3100) zum herausnehmbaren Aufnehmen von mindestens einem der Steuereinheit (3130), der Anzeigeeinheit (3140) und der handgehaltenen Eingabevorrichtung (3150) während der Lagerung oder des Transports des virtuellen Schweißsystems, wobei die handgehaltene Eingabevorrichtung (3150) nicht mit dem Gehäuse (3100) integriert ist, sondern herausnehmbar in dem Gehäuse (3100) aufgenommen ist, um sie nach der virtuellen Schweißaktivität dorthin zurückzulegen;
wobei das Gehäuse (3100) zum Aufbewahren und Transportieren des virtuellen Schweißsystems dient,
**dadurch gekennzeichnet, dass**
die Steuereinheit (3130) und/oder die Anzeigeeinheit (3140) mit dem Gehäuse integriert sind, um während der virtuellen Schweißaktivität in dem Gehäuse zu verbleiben.

2. System nach Anspruch 1, wobei das Gehäuse (3150) geeignet ist, während des Betriebs des virtuellen Schweißsystems als eine Stützfläche für die Steuereinheit (3130) und/oder die Anzeigeeinheit (3140) verwendet zu werden.

3. System nach Anspruch 1 oder 2, wobei die Steuereinheit (3130) des Weiteren einen Bewegungsverfolger (3514) zum Detektieren einer räumlichen Position der Eingabevorrichtung (3150) umfasst.

4. System nach Anspruch 3, wobei der Bewegungsverfolger (3514) mit dem Gehäuse (3100) integriert ist.

5. System nach einem der Ansprüche 1 bis 4, wobei die Steuereinheit (3130) und die Anzeigeeinheit (3140) mit dem Gehäuse (3100) integriert sind.

6. System nach einem der Ansprüche 1 bis 5, wobei die Anzeigeeinheit (3140) des Weiteren mindestens einen Lautsprecher zur Audioausgabe umfasst.

7. System nach einem der Ansprüche 1 bis 6, wobei die Eingabevorrichtung (3150) so bemessen und geformt ist, dass sie einen Schweißbrenner simuliert.

8. System nach einem der Ansprüche 1 bis 7, wobei das Gehäuse (3100) eine interne Stromquelle aufnimmt.

9. System nach einem der Ansprüche 1 bis 8, wobei die Stromquelle mindestens eine Batterie ist.

10. System nach einem der Ansprüche 1 bis 9, wobei das Gehäuse (3100) einen Tragegriff (3108) umfasst.

11. System nach einem der Ansprüche 1 bis 10, wobei das Gehäuse (3100) mindestens einen Tragegurt umfasst.

12. System nach einem der Ansprüche 1 bis 11, wobei das Gehäuse (3100) ein Paar Räder (3112) umfasst.

## Revendications

1. Système de soudage virtuel portable pour faciliter une activité de soudage virtuel, comprenant :
une unité de commande (3130) comprenant un sous-système basé sur processeur logique utilisable pour exécuter des instructions codées pour générer un environnement de soudage interactif qui émule une activité de soudage ;
une unité d'affichage (3140) connectée, de manière opérationnelle, à l'unité de commande (3130) pour représenter visuellement l'environnement de soudage interactif ;
un dispositif d'entrée portatif (3150) pour effectuer l'activité de soudage virtuel ; et
un boîtier (3100) pour loger, de manière amovible, au moins l'un de l'unité de commande (3130), l'unité d'affichage (3140), et le dispositif d'entrée portatif (3150), pendant le stockage ou le transport du système de soudage virtuel, dans lequel le dispositif d'entrée portatif (3150) n'est pas intégré au boîtier (3100) mais il est logé, de manière amovible, à l'intérieur du boîtier (3100) pour le retourner après l'activité de soudage virtuel ;
dans lequel le boîtier (3100) sert à stocker et à transporter le système de soudage virtuel,
**caractérisé en ce que**
au moins l'une de l'unité de commande (3130) et de l'unité d'affichage (3140) sont intégrées au boîtier pour rester dans le boîtier pendant l'activité de soudage virtuel.

2. Système selon la revendication 1, dans lequel le boîtier (3150) est utilisable pour servir de surface de support pour au moins l'une de l'unité de commande (3130) et l'unité d'affichage (3140), pendant le fonctionnement du système de soudage virtuel.

3. Système selon la revendication 1 ou 2, dans lequel l'unité de commande (3130) comprend en outre un capteur de mouvement (3514) pour détecter une position spatiale du dispositif d'entrée (3150).

4. Système selon la revendication 3, dans lequel le capteur de mouvement (3514) est intégré au boîtier (3100).

5. Système selon l'une des revendications 1 à 4, dans lequel l'unité de commande (3130) et l'unité d'affichage (3140) sont intégrées au boîtier (3100).

6. Système selon l'une des revendications 1 à 5, dans lequel l'unité d'affichage (3140) comprend en outre au moins un haut-parleur pour une sortie sonore.

7. Système selon l'une des revendications 1 à 6, dans lequel le dispositif d'entrée (3150) est dimensionné et formé pour simuler un chalumeau.

8. Système selon l'une des revendications 1 à 7, dans lequel le boîtier (3100) loge une source d'alimentation électrique interne.

9. Système selon l'une des revendications 1 à 8, dans lequel la source d'alimentation électrique est au moins une batterie.

10. Système selon l'une des revendications 1 à 9, dans lequel le boîtier (3100) comprend une poignée de transport (3108).

11. Système selon l'une des revendications 1 à 10, dans lequel le boîtier (3100) comprend au moins une sangle de transport.

12. Système selon l'une des revendications 1 à 11, dans lequel le boîtier (3100) comprend une paire de roulettes (3112).
